(19) Europäisches Patentamt
European Patent Office
Office européen des brevets

(11) EP 4 129 631 A1

(12) **EUROPEAN PATENT APPLICATION**
published in accordance with Art. 153(4) EPC

(43) Date of publication:
**08.02.2023 Bulletin 2023/06**

(21) Application number: **21774310.3**

(22) Date of filing: **18.03.2021**

(51) International Patent Classification (IPC):
***B29C 64/393*** *(2017.01)* ***B29C 64/165*** *(2017.01)*
***B29C 64/314*** *(2017.01)* ***B33Y 10/00*** *(2015.01)*
***B33Y 50/02*** *(2015.01)* ***B33Y 70/10*** *(2020.01)*

(52) Cooperative Patent Classification (CPC):
**B29C 64/165; B29C 64/314; B29C 64/393; B33Y 10/00; B33Y 50/02; B33Y 70/10**

(86) International application number:
**PCT/JP2021/011038**

(87) International publication number:
**WO 2021/193339 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2020 JP 2020050585**

(71) Applicant: **Ricoh Company, Ltd.**
**Tokyo 143-8555 (JP)**

(72) Inventors:
- **MIYAZAKI, Kohsuke**
  **Tokyo 143-8555 (JP)**
- **NAITO, Hiroyuki**
  **Tokyo 143-8555 (JP)**
- **YOKOYAMA, Takumi**
  **Tokyo 143-8555 (JP)**
- **SOGAME, Junjiroh**
  **Tokyo 143-8555 (JP)**
- **SATOH, Shinichiroh**
  **Tokyo 143-8555 (JP)**
- **OYA, Naoki**
  **Tokyo 143-8555 (JP)**
- **FUJII, Katsuhiko**
  **Tokyo 143-8555 (JP)**

(74) Representative: **Marks & Clerk LLP**
**15 Fetter Lane**
**London EC4A 1BW (GB)**

# (54) THREE-DIMENSIONAL MOLDING KIT AND METHOD FOR MANUFACTURING THREE-DIMENSIONALLY MOLDED ARTICLE

(57) A three-dimensional object producing method including applying an object forming liquid to powder including a base material and an organic material to form a solidified product, and removing the powder, which is deposited on the solidified product, from the solidified product using a powder removal liquid including an organic solvent. The following formulae are satisfied

$$\text{RED value of a non-forming part} < 1.20$$

$$\text{RED value of a forming part} > 0.55$$

The forming part is a portion of the powder to which the object forming liquid is applied, and the RED value of the forming part is a distance between HSP values of the forming part and HSP values of the organic solvent, and the non-forming part is a portion of the powder to which the object forming liquid is not applied, and the RED value of the non-forming part is a distance between HSP values of the non-forming part and the HSP values of the organic solvent.

EP 4 129 631 A1

## Description

### Technical Field

The present invention relates to a three-dimensional forming kit and a three-dimensional object producing method.

### Background Art

In recent years, there are high demands for production of various parts with small lots, or three-dimensional objects of complicated shapes. A method for producing a three-dimensional object using a mold available in the art has various problems. For example, the problems involve limitations in production of complicated and precise three-dimensional objects, and high cost for production of molds or for maintenance. Therefore, such a method is not suitable for production of various types of objects with small lots.
Meanwhile, three-dimensional molding (may be also referred to as "laminate molding," "additive molding," or "additive manufacturing,") is expected to be an effective method that may solve the above-described various problems. The three-dimensional molding is to laminate various materials based on data of shapes to directly produce a three-dimensional object.
There are various systems available as the above-described three-dimensional object molding, such as a selective laser sintering system, a photomolding system, a fused deposition molding system, a material jetting system, and a binder jetting system. Among the above-listed systems, the binder jetting system using an inkjet head has an advantage of a fast molding speed. On the other hand, the binder jetting system has a disadvantage that an obtained three-dimensional object has low dimensional accuracy. The cause of the low dimensional accuracy of the obtained three-dimensional object may be bleeding of a solvent component included in the ink into a non-forming part, or inadequate removal of excess powder deposited due to a liquid bridge force or fusion.
Therefore, for example, proposed as a method for removing excess powder is a production method where the powder can be removed by water as a binder resin having a water-soluble functional group is used and the water-soluble functional group has pKa to water where the pKa is smaller than pH of the powder removal liquid (see, for example, Patent Literature 1).
Moreover, proposed is a method where a step for forming a layer with a slurry material including inorganic particles and an organic compound, and a step for applying a liquid material are repeated, followed by immersing the resultant in a liquid material for forming a three-dimensional object to remove the slurry material that is not cured (see, for example, Patent Literature 2).

### Citation List

#### Patent Literatures

Patent Literature 1: Japanese Unexamined Patent Application Publication No. 2016-13658
Patent Literature 2: Japanese Unexamined Patent Application Publication No. 2017-94714

### Summary of Invention

#### Technical Problem

The present invention has an object to provide a three-dimensional object producing method that can remove powder deposited on a solidified product with strength of the solidified product maintained, and can efficiently produce a complicated three-dimensional shape.

#### Solution to Problem

As the means for solving the above-described problem, the three-dimensional object producing method of the first embodiment of the present disclosure includes applying an object forming liquid to powder to form a solidified product, and removing the powder, which is deposited on the solidified product, from the solidified product using a powder removal liquid. The powder includes a base material and an organic material. The powder removal liquid includes an organic solvent. The following formulae are satisfied:

$$\text{RED value of a non-forming part} < 1.20$$

$$\text{RED value of a forming part} > 0.55$$

The forming part is a portion of the powder to which the object forming liquid is applied, and the RED value of the forming part is a distance between HSP values of the forming part and HSP values of the organic solvent, and the non-forming part is a portion of the powder to which the object forming liquid is not applied, and the RED value of the non-forming part is a distance between HSP values of the non-forming part and the HSP values of the organic solvent.

Moreover, the three-dimensional object producing method of the second embodiment of the present disclosure includes applying an object forming liquid to powder to form a solidified product, and removing the powder, which is deposited on the solidified product, from the solidified product using a powder removal liquid. The object forming liquid includes an organic material. The powder includes a base material. The powder removal liquid includes an organic solvent. The following formula is satisfied:

$$\text{RED value of a forming part} > 0.55$$

The forming part is a portion of the powder to which the object forming liquid is applied, and the RED value of the forming part is a distance between HSP values of the forming part and HSP values of the organic solvent.

Effects of the Invention

The present invention can provide a three-dimensional object producing method that can remove powder deposited on a solidified product with strength of the solidified product maintained, and can efficiently produce a complicated three-dimensional shape.

Brief Description of the Drawings

FIG. 1 is a diagram illustrating three parameters constituting the Hansen solubility parameters (HSP);
FIG. 2 is a diagram illustrating that, when HSP of two materials are plotted in the Hansen space, the closer the distance between the two points is the more likely the materials are to dissolve into each other;
FIG. 3 is a diagram illustrating that a polymer has a value called an interaction radius $R_0$, and a sphere that has the radius $R_0$ and has the coordinates of the HSP of the polymer as a center is in the Hansen space;
FIG. 4A is a diagram illustrating a state of RED < 1 where HSP of a solvent is inside a sphere having a radius $R_0$;
FIG. 4B is a diagram illustrating a state of RED > 1 where HSP of a solvent is outside a sphere having a radius $R_0$;
FIG. 5 is a diagram illustrating a state that a multiple substance system can be represented with the Hansen solubility parameters;
FIG. 6 is a flowchart illustrating an example of a process flow of a determination method of HSP of a final reaction product;
FIG. 7 is a schematic diagram illustrating an example of a three-dimensional object producing apparatus used for the three-dimensional object producing method of the present disclosure;
FIG. 8A is a schematic diagram illustrating an example of the action of the three-dimensional object producing apparatus used for the three-dimensional object producing method of the present disclosure;
FIG. 8B is a schematic diagram illustrating an example of the action of the three-dimensional object producing apparatus used for the three-dimensional object producing method of the present disclosure;
FIG. 8C is a schematic diagram illustrating an example of the action of the three-dimensional object producing apparatus used for the three-dimensional object producing method of the present disclosure;
FIG. 8D is a schematic diagram illustrating an example of the action of the three-dimensional object producing apparatus used for the three-dimensional object producing method of the present disclosure;
FIG. 8E is a schematic diagram illustrating an example of the action of the three-dimensional object producing apparatus used for the three-dimensional object producing method of the present disclosure;
FIG. 9 is a graph depicting a relationship between the RED value of the non-forming part and solubility in Examples and Comparative Examples;
FIG. 10 is a graph depicting a relationship between the RED value of the forming part and the wet strength in

Examples and Comparative Examples;
FIG. 11 is a general external view illustrating an example of a three-dimensional object (e.g., a green body) having a complicated inner tube structure, where the three-dimensional object is formed by stacking solidified products;
FIG. 12 is a transparent view illustrating the complicated inner tube structure inside the green body of FIG. 11;
FIG. 13 is a translucent view illustrating the complicated inner tube structure inside the green body of FIG. 11;
FIG. 14 is an X-direction cross-sectional view of the green body of FIG. 11 (part 1);
FIG. 15 is an X-direction cross-sectional view of the green body of FIG. 11 (part 2);
FIG. 16 is an X-direction cross-sectional view of the green body of FIG. 11 (part 3); and
FIG. 17 is a Z-direction cross-sectional view of the green body of FIG. 11.

## Mode for Carrying out the Invention

(Three-dimensional object producing method)

In the first embodiment, the three-dimensional object producing method of the present disclosure includes applying an object forming liquid to powder to form a solidified product, and removing the powder, which is deposited on the solidified product, from the solidified product using a powder removal liquid. The powder includes a base material and an organic material. The powder removal liquid includes an organic solvent. The following formulae are satisfied: RED value of a non-forming part < 1.20

$$\text{RED value of a non-forming part} < 1.20$$

$$\text{RED value of a forming part} > 0.55$$

The forming part is a portion of the powder to which the object forming liquid is applied, and the RED value of the forming part is a distance between HSP values of the forming part and HSP values of the organic solvent. The non-forming part is a portion of the powder to which the object forming liquid is not applied, and the RED value of the non-forming part is a distance between HSP values of the non-forming part and the HSP values of the organic solvent. The three-dimensional object producing method may further include other steps according to the necessity.

In the second embodiment, the three-dimensional object producing method of the present disclosure includes applying an object forming liquid to powder to form a solidified product, and removing the powder, which is deposited on the solidified product, from the solidified product using a powder removal liquid. The object forming liquid includes an organic material. The powder includes a base material. The powder removal liquid includes an organic solvent. The following formula is satisfied:

$$\text{RED value of a forming part} > 0.55$$

The forming part is a portion of the powder to which the object forming liquid is applied, and the RED value of the forming part is a distance between HSP values of the forming part and HSP values of the organic solvent. The three-dimensional object producing method may further include other steps according to the necessity.

In the present disclosure, the "powder" may be also referred to as "particles" or a "powdery material." The "object forming liquid" may be also referred to as a "curing liquid" or a "reaction liquid." Moreover, the "solidified product" may be referred to as a "cured product." Furthermore, a three-dimensional object obtained by stacking solidified products may be also referred to as a "green body," a "sintered product," a "compact," or a "formed object." An object obtained by delipidating the "green body" through a heat treatment may be referred to as a "delipidated body." The "green body" and the "delipidated body" may be collectively referred to as a "sintering precursor."

In the art, there has been a problem when excess powder is removed with a water-soluble functional group containing binder resin and water. The problem is, if a metal, such as iron, copper, nickel, aluminium, and magnesium, is used as a base material and water is used as a removal liquid for the excess powder, the base material may react with water to generate by-products, or oxidization of the base material may progress. As a result, object forming may not finish with an intended metal composition, or the oxide layer of the base material may inhibit sintering.

Moreover, the present inventors have diligently conducted the researches and have found the following problem. After immersing a solidified product in a powder removal liquid, the solidified product is softened, thus the solidified product having the shape, such as a fine tube and a thin wall, may be deformed or collapsed by the solidified product’s own weight.

In the first embodiment of the three-dimensional object producing method of the present disclosure, therefore, the following formulae are satisfied in the powder removal step:

$$\text{RED value of non-forming part} < 1.20$$

$$\text{RED value of forming part} > 0.55$$

The following formulae are preferably satisfied:

$$\text{RED value of non-forming part} < 1.0$$

$$\text{RED value of forming part} > 1.0$$

The RED value of the forming part is a distance between HSP values of the forming part and HSP values of an organic solvent. The RED value of the non-forming part is a distance between HSP values of the non-forming part and the HSP values of the organic solvent. The forming part is a portion of the powder to which the object forming liquid is applied. The non-forming part is a portion of the powder to which the object forming liquid is not applied. Since the formulae are satisfied, the three-dimensional object producing method of the present disclosure according to the first embodiment can remove the powder deposited on the solidified product with the strength of the forming part maintained, and can efficiently produce a complicated three-dimensional shape.

In the second embodiment of the three-dimensional object producing method of the present disclosure, moreover, the following formula is satisfied in the powder removal step:

$$\text{RED value of forming part} > 0.55$$

The following formula is preferably satisfied:

$$\text{RED value of forming part} > 1.0$$

The RED value of the forming part is a distance between the HSP values of the forming part and the HSP values of the organic solvent. The forming part is a portion of the powder to which the object forming liquid is applied. Since the formula is satisfied, the three-dimensional object producing method of the present disclosure according to the second embodiment can remove the powder deposited on the solidified product with the strength of the forming part maintained, and can efficiently produce a complicated three-dimensional shape.

The RED value of the non-forming part is represented by the following mathematical equation (2):

[Mathematical equation (2)]

$$\text{RED value of non-forming part} = \{4*(dD_1-dD_S)^2+(dP_1-dP_S)^2+(dH_1-dH_S)^2\}^{0.5}/R_1$$

In the mathematical equation (2), dDi is a dispersion component of the HSP values of the non-forming part, $dD_s$ is a dispersion component of the HSP values of the organic solvent included in the powder removal liquid, $dP_1$ is a polarity component of the HSP values of the non-forming part, $dP_s$ is a polarity component of the HSP values of the organic solvent included in the powder removal liquid, $dH_1$ is a hydrogen bonding component of the HSP values of the non-forming part, $dH_s$ is a hydrogen bonding component of the HSP values of the organic solvent included in the powder removal liquid, and $R_1$ is an interaction radius of the HSP values of the non-forming part.

The RED value of the forming part is represented by the following mathematical equation (3):

[Mathematical equation (3)]

$$\text{RED value of forming part} = \{4*(dD_2-dD_S)^2+(dP_2-dP_S)^2+(dH_2-dH_S)^2\}^{0.5}/R_2$$

In the mathematical equation (3), $dD_2$ is a dispersion component of the HSP values of the forming part, $dD_s$ is a dispersion component of the HSP values of the organic solvent included in the powder removal liquid, $dP_2$ is a polarity component of the HSP values of the forming part, dPs is a polarity component of the HSP values of the organic solvent included in the powder removal liquid, $dH_2$ is a hydrogen bonding component of the HSP values of the forming part, dHs is a hydrogen bonding component of the HSP values of the organic solvent included in the powder removal liquid, and $R_2$ is the interaction radius $R_1$ of the HSP values of the non-forming part when the organic material is crosslinked, or is an interaction radius of the HSP values of the forming part when the organic material is not crosslinked.

<Determination methods of RED value of forming part and RED value of non-forming part>

The solubility of the forming part to the organic solvent in the powder removal liquid, the solubility of the organic solvent included in the powder removal liquid, and the solubility of the non-forming part to the organic solvent in the powder removal liquid are defined with the Hansen solubility parameters (HSP). The forming part is a portion of the powder to which the object forming liquid is applied, and the no-forming part is a portion of the powder to which the object forming liquid is not applied.

The Hansen solubility parameters (HSP) are based on a theory that two materials having similar intermolecular interactions are more likely to dissolve into each other. The HSP values are composed of three parameters, and represent solubility with a multidimensional vector. Materials having mutually similar HSP values are determined as being more likely to dissolve into each other. The vector is represented by a dispersion component, a polarity component, and a hydrogen bonding component (see FIG. 1). The dispersion component represents van der Waals force, the polarity component represents dipole moment force, and the hydrogen bonding component represents the force water or alcohol has, and a unit used for measuring each component is $MPa^{0.5}$.

The three parameters are treated as coordinates in a three-dimensional space (i.e., the Hansen space). When HSP values of two materials are plotted in the Hansen space, the closer the distance between the two points is the more likely the materials are to dissolve into each other (see FIG. 2). FIG. 2 illustrates that the solvent A is likely to dissolve the solute B.

Next, an interaction radius will be described.

Assuming that, the polymer has a value called an interaction radius $R_0$, and a sphere having the radius $R_0$ is placed in the Hansen space in a manner that a center of the sphere having the radius $R_0$ is on the coordinates of the HSP values of the polymer (see FIG. 3). In this case, the distance $R_a$ between the HSP values of the polymer and HSP values of an organic solvent can be calculated according to the following mathematical equation (1):

[Mathematical equation (1)]

$$Ra = \{4*(dD_p-dD_s)^2+(dP_p-dP_s)^2+(dH_p-dH_s)^2\}^{0.5}$$

In the mathematical equation (1), $dD_p$ is a dispersion component of the HSP values of the polymer, $dD_s$ is a dispersion component of the HSP values of the organic solvent, $dP_p$ is a polarity component of the HSP values of the polymer, $dP_s$ is a polarity component of the HSP values of the organic solvent, $dH_p$ is a hydrogen bonding component of the HSP values of the polymer, and $dH_s$ is a hydrogen bonding component of the HSP values of the organic solvent.

A relative energy difference (RED) of the system between $R_0$ and $R_a$ is defined as RED value = $R_a/R_0$.

In the case of RED value < 1 (the HSP values of the organic solvent are inside a sphere of the radius $R_0$) (see FIG. 4A), it is assumed that the polymer is soluble to the organic solvent. In the case of RED value > 1 (the HSP values of the solvent are outside the sphere of the radius $R_0$) (see FIG. 4B), conversely, it is assumed that the polymer is insoluble to the organic solvent.

In FIGs. 4A and 4B, the sphere shaded with diagonal lines is an interaction sphere (radius $R_0$) of the polymer, and the sphere shaded with dots is the HSP values of the organic solvent.

Next, a method for determining the HSP values of the forming part and the HSP values of the non-forming part will be described.

Since the object forming liquid is not applied to the non-forming part and the powder of the non-forming part is not solidified, the HSP values of the non-forming part can be determined experimentally as described below from a result indicating that the non-forming part is soluble or insoluble to the organic solvent of known HSP values in the object forming liquid.

In terms of HSP values of the forming part, conversely, it is difficult to judge solubility or insolubility because the powder is crosslinked due to function of a crosslinking agent when the crosslinking agent is included in the object forming liquid. However, the crosslinked organic material (e.g., a resin) is likely to absorb an organic solvent having HSP values close to the HSP values of the organic material (e.g., a resin) to swell. As the organic material (e.g., a resin) is swollen, the forming part is softened. Therefore, a method for determining HSP values based on the Hansen solubility

theory can be used for evaluating softening of the forming part, even when the organic material is insoluble to the organic solvent. Specifically, the organic material (e.g., a resin) constituting the forming part is linearly expressed with a formula of the SMILES by designating a terminal of a repeating unit as a dummy atom, and the SMILES string is input to Hansen solubility parameters calculation software HSPiP (ver. 5.2, available from Hansen-Solublity.com). As a result, the program automatically disassembles a molecule group into atom groups to calculate HSP values of the forming part.

As illustrated in FIG. 5, moreover, the Hansen solubility parameters (HSP) can be used for a multiple substance system. For example, an organic solvent exhibiting the similar solubility to the solubility of acetonitrile [(dispersion component (dD), polarity component (dP), hydrogen bonding component (dH)) = (15.3, 18.0, 6.1)] is represented as a mixed solvent (MIX) where ethylene carbonate (EC) [(dispersion component ($dD_{EC}$), polarity component ($dP_{EC}$), hydrogen bonding component ($dH_{EC}$)) = (18.0, 21.7, 5.1)] (60%) and butyl glycol acetate (BGA) [(dispersion component ($dD_{BGA}$), polarity component ($dP_{BGA}$), hydrogen bonding component ($dH_{BGA}$) = (15.3, 7.5, 6.8)] (40%) are mixed.

As presented below, (dispersion component ($dD_{MIX}$), polarity component ($dP_{MIX}$), hydrogen bonding component ($dH_{MIX}$)) of the mixed solvent (MIX) can be determined as sums multiplied by the blending ratio between the ethylene carbonate (EC) and butyl glycol acetate (BGA).

$$dD_{MIX} = 0.6*dD_{EC} + 0.4*dD_{BGA}$$

$$dP_{MIX} = 0.6*dP_{EC} + 0.4*dP_{BGA}$$

$$dH_{MIX} = 0.6*dH_{EC} + 0.4*dH_{BGA}$$

Accordingly, (dispersion component ($dD_{MIX}$), polarity component ($dP_{MIX}$), hydrogen bonding component ($dH_{MIX}$)) of the mixed solvent (MIX)is (16.9, 16.0, 5.8).

Next, determination methods of the RED value of the forming part and the RED value of the non-forming part will be described.

-Determination method of HSP values of organic solvent in powder removal liquid-

The HSP values of the organic solvent included in the powder removal liquid can be determined by searching in the database, or calculating from a chemical structure of the organic solvent, if the HSP values thereof are not in the database, using Hansen solubility parameters calculation software HSPiP.

-Determination method of HSP values of non-forming part-

The HSP values of the non-forming part (referred to as the HSP values (non-forming part) hereinafter) can be determined experimentally according to the method proposed by Hansen (C. M. Hansen, "Hansen solubility parameters: A user's handbook," 2nd edn., CRC Press, Boca Raton (2007)). The method is as described hereinafter.

An organic material and an organic solvent are weighed and collected in a 20 mL vial to form a 1% by mass polymer solution (total amount: 5 g) of the organic material (e.g., a resin) of the non-forming part as a sample. Ultrasonic waves are applied to vibrate the solution at 40°C for 10 hours to process the solution. After the processing, the organic material is determined as being insoluble when precipitation of suspended solids is observed, and is determined as being soluble when the organic material is dissolved. The same procedure is carried out with 24 types of organic solvents, and results of solubility or insolubility are input to Hansen solubility parameters calculation software HSPiP to determine HSP values of the non-forming part and $R_1$ that is the interaction radius of the non-forming part. A combination of the input to the HSPiP and calculation are performed 10 times, and the average values obtained are determined as HSP values of the non-forming part and the interaction radius $R_1$ of the non-forming part, respectively.

The 24 organic solvents are 1,4-dioxane, 1-butanol, 2-phenoxyethanol, acetone, acetonitrile, cyclohexane, cyclohexanol, diacetone alcohol, diethylene glycol, dimethylformamide, dimethyl sulfoxide, ethanol, ethyl acetate, γ-butyrolactone, methyl ethyl ketone, methanol, methyl isobutyl ketone (2-butanone), butyl acetate, N-methylpyrrolidone, propylene glycol monomethyl ether, propylene glycol monomethyl ether acetate, propylene carbonate, tetrahydrofuran, and toluene.

-Determination method of RED value of non-forming part-

The RED value of the non-forming part, which is a distance between the HSP values of the non-forming part

and the HSP values of the organic solvent, can be determined from the HSP values of the non-forming part determined in the above-described manner, $R_1$ (i.e., the interaction radius of the non-forming part), and the HSP values of the organic solvent in the powder removal liquid according to the following mathematical equation (2). The non-forming part is a portion of the powder to which the object forming liquid is not applied.

[Mathematical equation (2)]

$$\text{RED value of the non-forming part} = \{4*(dD_1-dD_S)^2+(dP_1-dP_S)^2+(dH_1-dH_S)^2\}^{0.5}/R_1$$

In the mathematical equation (2), dDi is a dispersion component of the HSP values of the non-forming part, $dD_s$ is a dispersion component of the HSP values of the organic solvent included in the powder removal liquid, $dP_1$ is a polarity component of the HSP values of the non-forming part, $dP_S$ is a polarity component of the HSP values of the organic solvent included in the powder removal liquid, $dH_1$ is a hydrogen bonding component of the HSP values of the non-forming part, $dH_S$ is a hydrogen bonding component of the HSP values of the organic solvent included in the powder removal liquid, and $R_1$ is an interaction radius of the HSP values of the non-forming part.

In the present disclosure, the excess powder deposited on the solidified product can be efficiently removed when the formula represented by RED value of the non-forming part < 1.20 is satisfied. Preferably, the formula represented by RED value of the non-forming part < 1.0, is satisfied.

-Determination method of HSP values of forming part-

When the crosslinking agent is included in the object forming liquid, the powder is crosslinked due to the function of the crosslinking agent. Therefore, the forming part becomes insoluble to (or nearly insoluble to) the organic solvent included in the powder removal liquid. The HSP values of the forming part however can be determined from the structure of the organic material as described above. Utilizing the above-described characteristics of the HSP with which a vector of a multiple substance system can be represented, moreover, HSP values of the forming part having an arbitrary degree of crosslinking can be determined in the following manner. Assuming that there are two segments in the organic material (e.g., a polymer) constituting the forming part, i.e., a reactive segment that reacts with the crosslinking agent included in the object forming liquid, and a non-reactive segment that does not react with the crosslinking agent included in the object forming liquid, the HSP values of the forming part having an arbitrary degree of crosslinking can be determined by multiplying the values of each segment by the abundance ratio of the corresponding segment.

The degree of crosslinking of the polymer can be determined by means of TD-NMR (pulse NMR) with reference to a calibration curve. The capitulation curve is created by determining a normalized NMR signal of a sample, which is prepared by adequately mixing and reacting raw materials, during a predetermined detection time as 100, and a normalized NMR signal of an unreacted sample during the same detection time as 0 by means of TD-NMR (pulse NMR).

When the object forming liquid includes the organic material but not the crosslinking agent, the HSP values of the organic material found in the polymer database can be used if the values are already known. If the HSP values of the organic material are not known, the solvent is removed from the object forming liquid according to an arbitrary method to separate the organic material, and the isolated organic material is used to determine HSP values of the forming part according to the method described in "Determination method of HSP values of non-forming part" (see the paragraph [0023]).

FIG. 6 is a flowchart depicting an example of a process flow of a method for determining HSP values of a forming part that is a final reaction product when a crosslinking agent is included in an object forming liquid.

In the step S1, HSP values of a polymer constituting the forming part are determined. A terminal of the repeating unit of the polymer is treated as a dummy atom to express the polymer with a linear formula according to SMILES, and the SMILES string is input to Hansen solubility parameters calculation software HSPiP (ver.5.2, available from Hansen-Solublity.com). Once the HSP values of the polymer are determined, the process is moved onto S2.

In the step S2, the polymer constituting the forming part is divided into 2 segments, i.e., a reactive segment that reacts with the crosslinking agent included in the object forming liquid, and a non-reactive segment that does not react with the crosslinking agent included in the object forming liquid. Once the polymer is divided into the 2 segments, the process is moved onto S3.

In the step S3, HSP values of the non-reactive segment, HSP values of the crosslinking agent, and HSP values of a reaction product between the crosslinking agent and the reactive segment are respectively calculated by Hansen solubility parameters software HSPiP. Once the calculation is completed, the process is moved onto S4.

In the step S4, HSP values of the non-reactive segment are calculated by mass fractions in which the reactive segment is subtracted from the polymer. Once the calculation is completed, the process is moved onto S5.

In the step S5, abundance ratios of the two segments, i.e., the reactive segment and the non-reactive segment, are determined considering the degree of crosslinking of the polymer, and the weighted arithmetic mean of each segment is calculated to determine HSP values of the forming part. Once the HSP values of the forming part are determined, the process is completed.

Based on the HSP values (forming part), the interaction radius $R_1$ of the non-forming part, and the HSP values of the organic solvent included in the powder removal liquid determined in the above-described manner, a RED value of the forming part can be determined according to the following mathematical equation (3). The RED value of the forming part is a distance between the HSP values of the forming part and the HSP values of the organic solvent included in the powder removal liquid. The forming part is a portion of the powder to which the object forming liquid is applied.

[Mathematical equation (3)]

$$\text{RED value of the forming part} = \{4*(dD_2-dD_S)^2+(dP_2-dP_S)^2+(dH_2-dH_S)^2\}^{0.5}/R_2$$

In the mathematical equation (3), $dD_2$ is a dispersion component of the HSP values of the forming part, $dD_s$ is a dispersion component of the HSP values of the organic solvent included in the powder removal liquid, $dP_2$ is a polarity component of the HSP values of the forming part, dPs is a polarity component of the HSP values of the organic solvent included in the powder removal liquid, $dH_2$ is a hydrogen bonding component of the HSP values of the forming part, dHs is a hydrogen bonding component of the HSP values of the organic solvent included in the powder removal liquid, and $R_2$ is the interaction radius $R_1$ of the HSP values of the non-forming part when the organic material is crosslinked, and is an interaction radius of the HSP values of the forming part when the organic material is not crosslinked.

Based on the Hansen solubility theory, essentially, it is ideal to use the interaction radius of the HSP values of the forming part to calculate the RED value of the forming part. When the organic material is crosslinked, however, the interaction radius $R_1$ of the HSP values of the non-forming part is used for calculation of the RED value of the forming part, as the interaction radius $R_1$ of the HSP values of the non-forming part is determined experimentally as a non-forming part (the organic material before crosslinking) and can be treated as a constant.

When the organic material is not crosslinked, conversely, the interaction radius $R_2$ of the HSP values of the forming part is used for calculation of the RED value of the forming part because the interaction radius $R_2$ of the HSP values of the forming part can be determined by the method described in "Determination method of HSP values of non-forming part."

When the formula represented by RED value of the forming part > 0.55 is satisfied in the present disclosure, the solidified product can maintain the strength without being softened. Preferably, the formula represented by RED value of the forming part > 1.0 is satisfied.

The three-dimensional forming kit used for the three-dimensional object producing method of the present disclosure will be described in detail hereinafter.

(Three-dimensional forming kit)

In the first embodiment, the three-dimensional forming kit of the present disclosure includes powder, an object forming liquid configured to solidify the powder to form a solidified product, and a powder removal liquid configured to remove the powder deposited on the solidified product from the solidified product. The powder includes a base material and an organic material. The powder removal liquid includes an organic solvent. The following formulae are satisfied:

$$\text{RED value of a non-forming part} < 1.20$$

$$\text{RED value of a forming part} > 0.55$$

The forming part is a portion of the powder to which the object forming liquid is applied, and the RED value of the forming part is a distance between HSP values of the forming part and HSP values of the organic solvent. The non-forming part is a portion of the powder to which the object forming liquid is not applied, and the RED value of the non-forming part is a distance between HSP values of the non-forming part and the HSP values of the organic solvent.

In the second embodiment, the three-dimensional forming kit of the present disclosure includes powder, an object forming liquid configured to solidify the powder to form a solidified product, and a powder removal liquid configured to remove the powder deposited on the solidified product from the solidified product. The powder includes a base material. The object forming liquid includes an organic material. The powder removal liquid includes an organic solvent. The following formula is satisfied:

RED value of a forming part > 0.55

The forming part is a portion of the powder to which the object forming liquid is applied, and the RED value of the forming part is a distance between HSP values of the forming part and HSP values of the organic solvent.

The "powder," the "object forming liquid," and the "powder removal liquid" of the three-dimensional forming kit of the present disclosure will be described in detail hereinafter.

<Powder removal liquid>

The powder removal liquid includes an organic solvent, and may further include other components.

-Organic solvent-

The organic solvent included in the powder removal liquid is not particularly limited provided that the organic solvent is an organic solvent that can dissolve the organic material of the powder but not the solidified product. The organic solvent may be appropriately selected depending on the intended purpose. As the organic solvent, at least one selected from the group consisting of ketone, halogen, alcohol, ester, ether, hydrocarbon, glycol, glycol ether, glycol ester, pyrrolidone, amide, amine and carbonic acid ester may be used.

Examples of the ketone include acetone, methyl ethyl ketone, diethyl ketone, methyl propyl ketone, methyl isobutyl ketone, methyl amyl ketone, cyclohexanone, isophorone, acetophenone, and diacetone alcohol.

Examples of the halogen include methylene chloride, trichloroethylene, perchloroethylene, HCFC141-b, HCFC-225, 1-bromopropane, chloroform, and orthodichlorobenzene.

Examples of the alcohol include methanol, ethanol, butanol, isobutanol, isopropyl alcohol, normal propyl alcohol, tertiary butanol, secondary butanol, 1,3-butanediol, 1,4-butanediol, 2-ethylhexanol, and benzyl alcohol.

Examples of the ester include methyl acetate, ethyl acetate, butyl acetate, isobutyl acetate, sec-butyl acetate, methoxybutyl acetate, 3-methoxybutyl acetate, 3-methoxy-3 methyl butyl acetate, ethyl-3-ethoxypropionate, amyl acetate, normal propyl acetate, isopropyl acetate, methyl lactate, ethyl lactate, butyl lactate, propylene glycol monomethyl ether acetate, propylene glycol monomethyl ether propionate, ethyl 3-ethoxypropionate, and dibasic acid ester (DBE) .

Examples of the ether include dimethyl ether, ethyl methyl ether, diethyl ether, ethylene oxide, tetrahydrofuran, furan, benzofuran, diisopropyl ether, methyl cellosolve, ethyl cellosolve, butyl cellosolve, 1,4-dioxane, methyl tert-butyl ether (MTBE), ethylene glycol dimethyl ether, diethylene glycol dimethyl ether, ethylene glycol diethyl ether, diethylene glycol diethyl ether, triethylene glycol dimethyl ether, diethylene glycol dibutyl ether, dipropylene glycol dimethyl ether, and dipropylene glycol monomethyl ether.

Examples of the hydrocarbon include benzene, toluene, xylene, solvent naphtha, normal hexane, isohexane, cyclohexane, ethyl cyclohexane, methyl cyclohexane, cyclohexene, cycloheptane, cyclopentane, heptane, pentamethyl benzene, pentane, methyl cyclopentane, normal heptane, isooctane, normal decane, normal pentane, isopentane, mineral spirit, dimethyl sulfoxide, and linear alkyl benzene.

Examples of the glycol include ethylene glycol, diethylene glycol, triethylene glycol, propylene glycol, and dimethoxy tetraethylene glycol.

Examples of the glycol ester include ethylene glycol monoethyl ether acetate, and diethylene glycol monobutyl ether acetate.

Examples of the glycol ether include methyl carbitol, ethyl carbitol, butyl carbitol, and methyl triglycol.

Examples of the pyrrolidone include 2-pyrrolidone, N-ethyl-2-pyrrolidone, and N-methyl-2-pyrrolidone.

Examples of the amine include dimethylformamide, dimethyl acetoamide, and formamide.

Examples of the amine include tetramethyl ethylene diamine, N,N-diisopropylethylamine, ethylenediamine, triethylamine, diethylamine, aniline, pyrrolidine, piperidine, morpholine, pyrrole, pyridine, pyridazine, oxazole, thiazole, and 1,3-dimethyl-2-imidazolidinone.

Examples of the carbonic acid ester include diethyl carbonate, dimethyl carbonate, propylene carbonate, and ethyl methyl carbonate.

Organic solvents other than the compounds listed above may be used as the organic solvent without any limitation, provided that the vapor pressure of the organic solvent is 2,000 Pa or less at 25°C, and the organic solvent is insoluble or very slightly soluble to water. The organic solvents may be appropriately selected depending on the intended purpose. The above-listed examples may be used alone or in combination.

-Other components-

As other components, additives, such as a surfactant, a defoaming agent, a preservative and fungicide, a pH

adjuster, a chelating agent, and an antirust agent, may be further added depending on the intended purpose.

<Object forming liquid>

The object forming liquid for use in the present disclosure is applied to powder to bind particles of the powder together to solidify the powder. When (1) the powder includes a base material and an organic material, the object forming liquid includes a crosslinking agent, preferably includes an organic solvent and a surfactant, and may further include other components according to the necessity.

When (2) the powder includes a base material, the object forming liquid includes an organic material, preferably includes a crosslinking agent, an organic solvent, and a surfactant, and may further include other components according to the necessity.

In the case of (1), as the object forming liquid is applied to the organic material included in the powder, the organic material is dissolved by the organic solvent included in the object forming liquid, and is crosslinked due to the function of the crosslinking agent included in the object forming liquid.

In the case of (2), as the object forming liquid is applied to the powder, the organic material included in the object forming liquid is deposited by evaporation of the organic solvent to solidify the powder with the deposited organic material.

-Organic material-

In the case of (2), the organic material included in the object forming liquid is preferably a hydroxyl group-containing resin considering adhesion at an interface between the organic material and a metal serving as the base material.

Examples of the hydroxyl group-containing resin include polyvinyl acetal, polyvinyl butyral, polyacrylic polyol, polyester polyol, polybutadiene polyol, ethyl cellulose, nitrocellulose, polyvinylpyrrolidone, a partially saponified vinyl acetate copolymer (e.g., vinyl chloride-vinyl acetate, and ethylene-vinyl acetate), polyether polyol, and phenol-based polyol. The above-listed examples may be used alone or in combination.

An amount of the organic material is preferably 1% by mass or greater but 20% by mass or less, and more preferably 1% by mass or greater but 10% by mass or less, relative to a total amount of object forming liquid.

As the object forming liquid including the resin is applied to a layer of the powder that is made up of metal particles, the resin is disposed onto the layer of the powder. Once an appropriate heating process corresponding to a softening point of the resin is performed, the resin acts as a binder for binding the metal particles in the area where the object forming liquid is applied. As a result, a formed object before sintering, such as a solidified product and a green body derived from the solidified product, is formed.

The glass transition temperature Tg of the resin is preferably 0°C or higher, more preferably 10°C or higher, and even more preferably 20°C or higher. Moreover, the glass transition temperature Tg of the resin is preferably 100°C or lower, more preferably 90°C or lower, and even more preferably 80°C or lower.

The softening point of the resin is preferably 70°C or higher, more preferably 80°C or higher, and even more preferably 90°C or higher. Moreover, the softening point of the resin is preferably 150°C or lower, more preferably 140°C or lower, and even more preferably 130°C or lower.

The number average molecular weight (Mn) of the resin is preferably 5,000 or greater but 50,000 or less, and more preferably 10,000 or greater but 30,000 or less. When the number average molecular weight (Mn) is within the above-mentioned range, improvement in strength and forming precision, reduction in viscosity of the object forming liquid, and improvement in the resin concentration in the object forming liquid are both achieved.

An amount of the resin is preferably 5.0% by mass or greater, more preferably 7.0% by mass or greater, even more preferably 10.0% by mass or greater, and particularly preferably 11.0% by mass or greater, relative to the mass of the object forming liquid. Moreover, the amount of the resin is preferably 30.0% by mass or less, more preferably 25.0% by mass or less, and even more preferably 20.0% by mass or less. When the amount of the resin is 5.0% by mass or greater, binding strength of a formed object before sintering, such as a solidified product, and a green body derived from the solidified product, improves. When the amount of the resin is 30.0% by mass or less, viscosity of the object forming liquid reduces, thus the object forming liquid can be appropriately ejected, for example, by an inkjet system.

An amount of the organic solvent is preferably 60.0% by mass or greater but 95.0% by mass or less, and more preferably 70.0% by mass or greater but 95.0% by mass or less, relative to the mass of object forming liquid. When the amount of the organic solvent is 60.0% by mass or greater but 95.0% by mass or less, solubility of the resin improves, thus viscosity of the object forming liquid reduces, and the object forming liquid can be appropriately ejected, for example, by an inkjet system. Moreover, the object forming liquid is prevented from being dried in an object forming liquid applying unit, and the object forming liquid having excellent ejection stability can be obtained.

A mass ratio (organic solvent/resin) between the amount of the organic solvent and the amount of the resin is

preferably 75/25 or greater but 95/5 or less. When the mass ratio is 75/25 or greater, solubility of the resin improves, thus viscosity of the object forming liquid reduces, and the object forming liquid can be appropriately ejected, for example, by an inkjet system. When the mass ratio is 95/5 or less, binding strength of a formed object before sintering, such as a solidified product, and a green body derived from the solidified product, improves.

-Organic solvent-

The organic solvent is a fluid component used for maintaining the object forming liquid in a liquid state at room temperature.

The organic solvent is not particularly limited, provided that a vapor pressure of the organic solvent is 2,000 Pa or less at 25°C and the organic solvent is insoluble or very slightly soluble to water. The organic solvent may be appropriately selected depending on the intended purpose.

Since the vapor pressure of the organic solvent is 2,000 Pa or less at 25°C, a nozzle is prevented from being dried during idle time of a device (e.g., when a device is standing by), thus the ejection stability improves.

The phrase "being insoluble or very slightly soluble to water" means that solubility to water is 80 g/L or less.

Examples of the organic solvent include aliphatic hydrocarbon or aromatic hydrocarbon, such as n-octane, m-xylene, and solvent naphtha; ketones, such as diisobutyl ketone, 3-heptanone, and 2-octanone; ester, such as butyl acetate, amyl acetate, n-hexyl acetate, n-octyl acetate, ethyl butyrate, ethyl valerate, ethyl caprylate, ethyl octylate, ethyl acetoacetate, ethyl 3-ethoxypropionate, diethyl oxalate, diethyl malonate, diethyl succinate, diethyl adipate, bis 2-ethylhexyl maleate, triacetin, tributyrin, and ethylene glycol monobutyl ether acetate; ether, such as dibutyl ether, 1,2-dimethoxybenzene, and 1,4-dimethoxybenzene; dimethyl sulfoxide; and dihydroterpinyl acetate. The above-listed examples may be used alone or in combination.

Compounds other than the compounds listed above may be used as the organic solvent without any limitation, provided that a vapor pressure of a compound is 2,000 Pa or less at 25°C, and the compound is insoluble or very slightly soluble to water. Compounds may be appropriately selected depending on the intended purpose.

An amount of the organic solvent is preferably 30% by mass or greater but 90% by mass or less, and more preferably 50% by mass or greater but 80% by mass or less, relative to the total amount of the object forming liquid. When the amount of the organic solvent is 30% by mass or greater but 90% by mass or less, solubility of the resin improves, and strength of the three-dimensional object improves. Moreover, a nozzle is prevented from being dried during idle time of a device (during standing by), and clogging to block the passage of a liquid, or printing defects due to nozzle clogging can be prevented.

-Crosslinking agent-

In the case of (1), the crosslinking agent is configured to form a covalent bond with a reactive functional group of the organic material (resin) of the powder to form a crosslink structure. Therefore, the crosslinking agent can enhance strength of a solidified product to be obtained, and solvent resistance of the solidified product can improve.

In the case of (2), moreover, the crosslinking agent is configured to crosslink as heat or ultraviolet rays are applied after depositing the object forming liquid onto the powder. Therefore, the crosslinking agent can enhance strength of a solidified product to be obtained, and solvent resistance of the solidified product can improve.

In the present disclosure the "crosslinking agent" is synonymous with a "curing agent."

The crosslinking agent is not particularly limited, and may be appropriately selected from isocyanate, acid anhydride, epoxy, and phenol aldehyde. The crosslinking agent is preferably two or more groups, more preferably three or more groups, selected from isocyanate, acid anhydride, epoxy, and phenol aldehyde within a molecule of the crosslinking agent or at terminals of a molecule of the crosslinking agent.

Examples of the isocyanate include diisocyanate, and polyisocyanate.

Examples of the diisocyanate include aromatic or aromatic-derived polyisocyanate, such as tolylene diisocyanate (TDI), diphenyldimethane diisocyanate (MDI), polymeric MDI (MDI), toluidine diisocyanate (TODI), naphthalene diisocyanate (NDI), xylylene diisocyanate (XDI), and paraphenylene diisocyanate; aliphatic isocyanates such as isophorone diisocyanate (IPDI) and hexamethylene diisocyanate (HMDI); lysine diisocyanate (LDI); and tetramethyl xylene diisocyanate (TMXDI). The above-listed examples may be used alone or in combination.

Examples of the polyisocyanate include adducts of diisocyanate, isocyanurates, and allophnates.

Examples of the acid anhydride include acid dianhydride.

Examples of the acid dianhydride include pyromellitic acid anhydride, 3,4'-oxydiphthalic acid anhydride, 4,4'-oxydiphthalic acid anhydride, 4,4-carbonyldiphthalic acid anhydride, bicyclo [2.2.2]oct-7-ene-2,3,5,6-tetracarboxylic acid dianhydride, diphenyl-3,3',4,4'-tetracarboxylic acid dianhydride, diphenyl-2,3,3',4'-tetracarboxylic acid dianhydride, meso-butane-1,2,3,4-tetracarboxylic acid dianhydride, 1,2,3,4-cyclobutanetetracarboxylic acid dianhydride, 1,2,3,4-cyclopentanetetracarboxylic acid dianhydride, 1,2,4,5-cyclohexanetetracarboxylic acid dianhydride, 5-(2,5-dioxotetrahydrofuryl)-3-methyl-3-cyclohexene-1,2-dicarboxylic acid anhydride, 4-(2,5-dioxotetrahydrofuran-3-yl)-tetralin-1,2-dicarboxylic acid anhydride, 5,5'-(ethyne-1,2-diyl)bis(isobenzofuran-1,3-dione), 5,5'-(9H-fluorene-9,9-diyl)bis(2-benzofuran-1,3-dione), naphthalene-1,4,5,8-tetracarboxylic acid dianhydride, 4,4'-(4,4'-isopropylidenediphenoxy)bis(phthalic acid anhydride), 1,2,3,4-tetramethyl-1,2,3,4-cyclobutane tetracarboxylic acid dianhydride, octahydrobiphenylene-4a,8b:4b,8a-tetracarboxylic acid dianhydride, bis(1,3-dioxo-1,3-dihydrobenzofuran-5-carboxylic acid)1,4-phenylene, 3,4,9,10-perylenetetracarboxylic acid dianhydride, and 4,4'-ethylenebis(2,6-morpholinedione), and N,N-bis[2-(2,6-dioxomorpholino)ethyl]glycine. The above-listed examples may be used alone or in combination.

Examples of the epoxy include diepoxide, and polyepoxide. Examples of the diepoxide include aliphatic epoxy monomers, such as 1,3-butadienediepoxide, 1,5-hexadienediepoxide, and 1,7-octadienediepoxide; epoxy monomers, such as bisphenol A diglycidyl ether; and polyfunctional epoxy monomers, such as triglycidyl isocyanurate, and 4,4'-methylenebis(N,N-diglycidylaniline). The above-listed examples may be used alone or in combination.

An amount of the crosslinking agent is preferably 1.0% by mass or greater but 50% by mass or less, and more preferably 10% by mass or greater but 30% by mass or less, relative to the total amount of the object forming liquid. When the amount of the crosslinking agent is 1.0% by mass or greater but 50% by mass or less, a three-dimensional object to be formed is prevented from having inadequate strength, increase in viscosity or gelation of the object forming liquid is prevented, and liquid preservability or viscosity stability is prevented from deteriorating.

-Surfactant-

The surfactant is preferably added for adjusting surface tension of the object forming liquid etc.

Examples of the surfactant include an anionic surfactant, a nonionic surfactant, an amphoteric surfactant, an acetylene glycol-based surfactant, a fluorine-based surfactant, and a silicone-based surfactant.

Examples of the anionic surfactant include salts, such as polyoxyethylene alkyl ether acetate, dodecylbenzene sulfonate, succinic acid ester sulfonate, laurate, and polyoxyethylene alkyl ether sulfate.

Examples of the nonionic surfactant include polyoxyethylene alkyl ether, polyoxyethylene polyoxypropylene alkyl ether, polyoxyethylene alkyl ester, polyoxyethylene polyoxypropylene alkyl ester, polyoxyethylene sorbitan fatty acid ester, polyoxyethylene alkylphenyl ether, polyoxyethylene alkyl amine, and polyoxyethylene alkyl amide.

Examples of a commercial product of the nonionic surfactant include LATEMUL series, such as LATEMUL PD420, 430, and 450 (available from Kao Corporation).

Examples of the amphoteric surfactant include laurylaminopropionate, lauryl dimethyl betaine, stearyl dimethyl betaine, and lauryl dihydroxyethyl betaine.

A specific example of the surfactant is not particularly limited and may be appropriately selected depending on the intended purpose. Suitable examples thereof include lauryldimethylamine oxide, myristyldimethylamine oxide, stearyldimethylamine oxide, dihydroxyethyllaurylamine oxide, polyoxyethylene cocoalkyl dimethyl amine oxide, dimethylalkyl(coco)betaine, and dimethyl lauryl betaine.

The acetylene glycol-based surfactant is not particularly limited and may be appropriately selected depending on the intended purpose. Examples thereof include acetylene glycol-based surfactants, such as 2,4,7,9-tetramethyl-5-decyne-4,7-diol, 3,6-dimethyl-4-octyne-3,6-diol, and 3,5-dimethyl-1-hexyn-3-ol (e.g., SURFYNOL 104, 82, 465, 485, or TG, available from Air Products and Chemicals, Inc. (USA)). Among the above-listed examples, SURFYNOL 465, 104, and TG are preferable.

The fluorine-based surfactant is not particularly limited and may be appropriately selected depending on the intended purpose. Examples thereof include perfluoroalkyl sulfonate, perfluoroalkyl carboxylate, perfluoroalkyl phosphoric acid ester, a perfluoroalkyl ethylene oxide adduct, perfluoroalkyl betaine, a perfluoroalkylamine oxide compound, a polyoxyalkylene ether polymer having a perfluoroalkyl ether group in a side chain thereof or sulfuric acid ester salt thereof, and a fluorine-containing aliphatic ester polymer.

As the fluorine-based surfactant, a commercial product may be used. Examples of the commercial product include SURFLON S-111, S-112, S-113, S-121, S-131, S-132, S-141, and S-145 (available from AGC Inc.); FLUORAD FC-93, FC-95, FC-98, FC-129, FC-135, FC-170C, FC-430, FC-431, and FC-4430 (available from Sumitomo 3M Limited); FT-110, 250, 251, and 400S (available from Neos Corporation); ZONYL FS-62, FSA, FSE, FSJ, FSP, TBS, UR, FSO, FSO-100, FSN-N, FSN-100, FS-300, and FSK (available from DuPont de Nemours, Inc.); POLYFOX PF-136A, PF-156A, and PF-151N (available from OMNOVA Solutions Inc.); and UNIDYNE DSN-403N (available from DAIKIN INDUSTRIES, LTD.).

The silicone-based surfactant is not particularly limited and may be appropriately selected depending on the intended purpose. Examples thereof include BYK-345, BYK-346, BYK-347, and BYK-348 (available from BYK JAPAN KK).

The surfactant is not limited to the above-listed examples, and the above-listed examples may be used alone or as a mixture of two or more.

To exhibit an effect of the object forming liquid to permeate the organic material disposed on each particle

surface of the powder, the object forming liquid preferably includes the surfactant(s) in the total amount of 0.01% by mass or greater but 5% by mass or less. When the total amount of the surfactant(s) is 0.01% by mass or greater, an adequate effect for imparting wettability is obtained, and an adequate effect for improving permeability against the organic material disposed on each particle surface of the powder. When the total amount of the surfactant(s) is 5% by mass or less, excellent storage stability is obtained.

-Other components-

Other components are not particularly limited and may be appropriately selected depending on the intended purpose. Examples thereof include an anti-drying agent, a viscosity adjuster, a permeating agent, a defoaming agent, a pH adjuster, an antiseptic agent, a fungicide, a colorant, a preservative, and a stabilizer.

-Physical properties etc. of object forming liquid-

The viscosity of the object forming liquid at 25°C is preferably 3 mPa·s or greater but 20 mPa·s or less, and more preferably 5 mPa·s or greater but 10 mPa·s or less. When the viscosity is 3 mPa·s or greater, or the viscosity is 20 mPa·s or less, jets from an inkjet nozzle are stabilized, adequate strength of a solidified product formed by applying the object forming liquid onto the powder layer is obtained, and excellent dimensional accuracy is achieved.

For example, the viscosity can be measured according to JIS K7117.

The surface tension of the object forming liquid at 25°C is preferably 40 mN/m or less, and more preferably 10 mN/m or greater but 30 mN/m or less. When the surface tension is 40 mN/m or less, jets from an inkjet nozzle are stabilized, adequate strength of a solidified product formed by applying the object forming liquid onto the powder layer is obtained, and excellent dimensional accuracy is achieved.

For example, the surface tension can be measured by means of DY-300 available from Kyowa Interface Science Co., Ltd.

<Powder>

There are (1) a case where the powder includes a base material, and (2) a case where the powder includes a base material and an organic material.

In the case of (1) the powder including the base material, the powder is preferably powder of the base material. In the case of (2) the powder including the base material and the organic material, the powder is preferably particles, and each particle has a structure where the surface of the base material is covered with the organic material.

-Base material-

The base material is not particularly limited, provided that the base material is in the form of powder or particles, and may be appropriately selected depending on the intended purpose. Examples of a material of the base material include a metal, ceramic, carbon, a polymer, wood, a biocompatible material, sands, and a magnetic material. To form a three-dimensional object having extremely high strength, the base material is preferably a metal or a ceramic on which a sintering process (step) can be ultimately performed.

The metal is not particularly limited, provided that the metal includes a metal as a substance. Examples thereof include magnesium (Mg), aluminium (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and alloys thereof. Among the above-listed examples, stainless steel (SUS), iron (Fe), cupper (Cu), silver (Ag), titanium (Ti), aluminium (Al), or an alloy thereof is suitably used. Examples of the aluminium alloy include $AlSi_{10}Mg$, $AlSi_{12}$, $AlSi_7Mg_{0.6}$, $AlSi_3Mg$, $AlSi_9Cu_3$, SCALMALLOY, and $ADC1_2$. The above-listed examples may be used alone or in combination.

Examples of the ceramic include oxide, carbide, nitride, and hydroxide.

Examples of the oxide include metal oxide. Examples of the metal oxide include silica ($SiO_2$), alumina ($Al_2O_3$), zirconia ($ZrO_2$), and titania ($TiO_2$) . However, those listed above are merely examples. The ceramic is not limited to the above-listed examples. The above-listed examples may be used alone or in combination.

As the base material, a commercial product may be used. Examples of the commercial product include pure Al (product name: A1070-30BB, available from TOYO ALUMINIUM K.K.), pure Ti (available from OSAKA Titanium Technologies Co., Ltd.), SUS316L (product name: PSS316L, available from Sanyo Special Steel Co., Ltd.); AlSI10Mg (Si10MgBB, available from TOYO ALUMINIUM K.K.); $SiO_2$ (product name: EXCELICA SE-15K, available from Tokuyama Corporation), $AlO_2$ (product name: TAIMICRON TM-5D, available from TAIMEI CHEMICALS CO., LTD.), and ZrOz (product name: TZ-B53, available from Tosoh Corporation).

For improving adhesion between the base material and the organic material or coatability on the base material, any of surface treatments (or surface modification treatments) known in the art may be performed on the base material.

The volume average particle diameter of the base material is not particularly limited and may be appropriately selected depending on the intended purpose. For example, the volume average particle diameter of the base material is preferably 2 um or greater but 100 μm or less, and more preferably 8 μm or greater but 50 μm or less.

When the volume average particle diameter of the base material is 2 μm or greater, an adverse effect of aggregation is prevented, the base material is easily coated with the resin, yield and production efficiency of a three-dimensional object are prevented from being reduced, and operability or handling of a base material and a three-dimensional object is prevented from becoming difficult. When the volume average particle diameter is 100 μm or less, decrease in contact points between the particles, or increase of gaps between the particles can be prevented, thus reduction in strength of a three-dimensional object or a sintered product of the three-dimensional object can be prevented.

A particle size distribution of the base material is not particularly limited and may be appropriately selected depending on the intended purpose. The particle size distribution of the base material is preferably a sharp distribution.

The volume average particle diameter and particle size distribution of the base material can be measured by means of any of particle size measuring devices known in the art, such as a particle size distribution analyzer MICROTRACK MT3000II series (available from MicrotracBel Corporation).

The external shape, circularity, flowability, wettability etc. of the base material are appropriately selected depending on the intended purpose.

The base material can be produced by any of methods known in the art. Examples of a method for producing the base material in the form of powder or particles include pulverization where pressure to compress, impact, friction, etc. is applied to a solid to grind; atomization where a molten metal is sprayed and cooled rapidly to yield powder; precipitation where a component dissolved in a liquid is precipitated; and a vapor chemical reaction where a material is vaporized and crystallized.

A production method of the base material is not particularly limited. As the more preferable method, for example, atomization is listed because spherical shapes are obtained, and resultant particles have a narrow deviation range of particle diameters. Examples of the atomization include water atomizing, gas atomizing, centrifugal atomization, and plasma atomization. Any of the above-listed methods is suitably used.

-Organic material-

The organic material is not particularly limited, provided that the organic material is used in the case of (1), has a reactive functional group, is soluble to the object forming liquid, and reacts with the crosslinking agent included in the object forming liquid to form a crosslink structure with covalent bonds.

The organic material having solubility (or being soluble) means that, when 1 g of a resin is mixed with 100 g of a solvent constituting the object forming liquid of 30°C, for example, the solvent dissolves 90% by mass or greater of the resin.

The organic material is preferably a material having low reactivity to metal powder having high activity (or highly active metal powder) as a base material, can be dissolved in (or is soluble to) an organic solvent before object forming (or solidifying), and is not dissolved in (or is insoluble to) an organic solvent after object forming (or solidifying and crosslinking). Particularly, the organic material is more preferably soluble to an organic solvent having low solubility to water.

Since the organic material covers each particle surface of the base material, dust explosion that may be caused when a particle size of the base material is small can be prevented. When the organic material has low reactivity to metal powder having high activity (or active metal powder) as a base material, can be dissolved in (or can be soluble to) an organic solvent before application of the object forming liquid, and is not dissolved in (or is insoluble to) the organic solvent after application of the object forming liquid (or after crosslinking), moreover, a highly active metal, i.e., a water reactive material (e.g., aluminium, and titanium), can be used as the base material, and a produced solidified product (or a three-dimensional object) can be prevented from being collapsed when the solidified product is immersed in a solvent-based solution.

The reactive functional group is not particularly limited, provided that the reaction functional group is a group that reacts with the crosslinking agent to form a covalent bond. The reactive functional group may be appropriately selected depending on the intended purpose. Examples of the reactive functional group include a hydroxyl group, a carboxyl group, an amide group, a phosphoric acid group, a thiol group, an acetoacetyl group, and an ether bond.

Among the above-listed examples, the resin serving as the organic material preferably includes a hydroxyl group considering improved adhesion with the base material, or reactivity to the crosslinking agent.

If the organic material is remained in the three-dimensional object during sintering, sintering may be obstructed. To prevent the obstruction of sintering due to the residual organic material, the organic material is preferably a material that is thermally decomposed by 95% by mass or greater when a resin of the material is heated on its own at 450°C.

The organic material is preferably a hydroxyl group-containing resin. Examples of the hydroxyl group-containing resin include polyvinyl acetal (glass transition temperature: 107°C), polyvinyl butyral (glass transition temperature: 67°C), polyacrylic polyol (glass transition temperature: 80°C), polyester polyol (glass transition temperature: 133°C), polybutadiene polyol (glass transition temperature: -17°C), ethyl cellulose (glass transition temperature: 145°C), and nitrocellulose (glass transition temperature: 50°C). Other examples thereof include a partially saponificated vinyl acetate copolymer (e.g., vinyl chloride-vinyl acetate, and ethylene-vinyl acetate), polyether polyol, and phenol-based polyol. The above-listed examples may be used alone or in combination. Among the above-listed examples, polyacrylic polyol is preferable.

A glass transition temperature of the organic material means a glass transition temperature of a homopolymer of the organic material included in the solidified product. As the glass transition temperature (Tg), a value disclosed in a catalog is used when a glass transition temperature of a resin to be used is mentioned in the catalog available from a manufacturer of the resin. When the catalog does not mention a glass transition temperature, the glass transition temperature (Tg) of the organic material is a value measured by differential scanning calorimetry (DSC) in the following manner.

-Measurement method of glass transition temperature (Tg)-

Polymerization of a polymerizable monomer can be performed according to a general solution polymerization method.

A: 10% by mass polymerizable monomer toluene solution
B: 5% by mass azobisisobutyronitrile serving as a polymerization initiator

A and B are enclosed in a test tube with nitrogen purging, and the test tube is shaken in a warm water bath of 60°C for 6 hours to synthesize a polymer. Thereafter, the resultant is reprecipitated in a solvent (e.g., methanol, and petroleum ether) that dissolves the polymerizable monomer but dos not dissolve the polymer, followed by filtration to collect the polymer. The obtained polymer is measured by DSC. As a device for DSC, DSC120U available from Seiko Instruments Inc. is used. The measurement can be performed at a measuring temperature of from 30°C through 300°C, and at a heating rate of 2.5 °C/min.

Among the above-described organic materials, preferred is an organic material having many hydroxyl groups within a molecule thereof, not at terminals of the molecule, and having a certain weight average molecular weight or greater and a certain hydroxyl value or higher.

The weight average molecular weight of the organic material is preferably 100,000 or less, and more preferably 2,000 or greater but 100,000 or less. It is preferred that the organic material have the weight average molecular weight of 100,000 or less, and be a solid at room temperature.

The hydroxyl value of the organic material is preferably 50 mgKOH/g or greater, and more preferably 100 mgKOH/g or greater.

A commercial product may be used as the organic material. Examples of the commercial product of the organic material include polyacrylic polyol (e.g., ACRYDIC WFU-580, available from DIC Corporation), polyester polyol (e.g., POLYLITE OD-X-668, available from DIC Corporation, and ADEKA NEWACE YG-108, available from ADEKA Corporation), polybutadiene polyol (e.g., GQ-1000, available from Nippon Soda Co., Ltd.), polyvinyl butyral (e.g., MO Vital B20H, available from Kuraray Co., Ltd.), polyvinyl acetal (e.g., ESLEC BM-2,KS-1, available from Sekisui Chemical Co., Ltd.), ethyl cellulose (e.g., ETHOCEL, available from NISSHIN KASEI CO., LTD.), and polyacryl (e.g., OLICOX KC-3000, available from Kyoeisha Chemical Co., Ltd.).

As the powder, preferred is powder made up of particles where each particle includes the base material and the organic material coating the surface of the base material.

A coating thickness of the organic material on the base material is preferably 5 nm or greater but 1,000 nm or less, more preferably 5 nm or greater but 500 nm or less, even more preferably 50 nm or greater but 300 nm or less, and particularly preferably 100 nm or greater but 200 nm or less. The coating thickness of the organic material is the average thickness.

Since a cross-linking reaction due to the crosslinking agent is utilized in the present disclosure, the coating thickness of the organic material can be reduced compared to a coating thickness commonly use in the art, and both strength and precision can be achieved with a thin film of the organic material.

When the average thickness as the coating thickness is 5 nm or greater, the strength of the solidified product formed with the powder (or the powder layer) by applying the object forming liquid to the powder improves, thus a problem of deformation etc. may not be caused during processes to follow, such as sintering, or during handling. When the average thickness is 1,000 nm or less, dimensional accuracy of the solidified product formed with the powder (or the powder layer) by applying the object forming liquid to the powder improves.

For example, the average thickness can be determined in the following manner. After imbedding the powder

in an acrylic resin etc., etching etc. is performed to expose a surface of the base material, the thickness of the organic material is measured at arbitrary 10 points under a scanning tunneling microscope STM, an atomic force microscope AFM, or a scanning electron microscope SEM etc. An average value of the measured values is calculated, and the average value is determined as the average thickness.

A ratio (or a surface coverage rate) of the area of the organic material covering the surface of the base material relative to the surface area of the base material is not particularly limited provided that the organic material covers the base material to the extent that the effect obtainable by the present disclosure can be exhibited. For example, the surface coverage rate is preferably 15% or greater, more preferably 50% or greater, and particularly preferably 80% or greater.

When the surface coverage rate is 15% or greater, the strength of the solidified product formed with the powder (or the powder layer) by applying the object forming liquid to the powder improves, thus a problem of deformation etc. may not be caused during processes to follow, such as sintering, or during handling. In addition, dimensional accuracy of the solidified product formed with the powder (or the powder layer) by applying the object forming liquid to the powder improves.

For example, the surface coverage rate is determined by observing a photograph of the powder, determining a ratio (%) of an area covered with the organic material to a total surface area of a particle of the powder on arbitrary 10 particles among the particles of the powder depicted on the two-dimensional photograph, and calculating the average value of the measured values as a surface coverage rate. Alternatively, the surface coverage rate can be measured by performing elemental mapping on an area covered with the organic material according to energy dispersive X-ray spectroscopy, such as SEM-EDS.

-Other components-

Other components are not particularly limited and may be appropriately selected depending on the intended purpose. Examples of other components include a plasticizer, filler, a leveling agent, a sintering aid, and polymeric resin particles.

The plasticizer is preferable because a layer formed of the powder etc. can be easily and efficiently formed.

The filler is a material mainly effective for depositing on surfaces of particles of the powder, or filling gaps between the particles of the powder. For example, effects obtainable by use of the filler include that strength or dimensional accuracy of the three-dimensional object can be enhanced because flowability of the powder improves, the number of contact points between particles of the powder increases, and gaps between the particles of the powder decrease.

The leveling agent is a material that is effective mainly for controlling wettability of surfaces of particles of the powder. For example, effects obtainable by use of the leveling agent include that permeability of the object forming liquid to the powder is enhanced, strength of the three-dimensional object increases, forming speed increases, and a shape of the three-dimensional object is stably retained.

The sintering aid is a material effective for improving sintering efficiency when the obtained three-dimensional object is sintered. For example, effects obtainable by use of the sintering aid include that strength of the three-dimensional object improves, a sintering temperature can be reduced, and duration of the sintering can be shortened.

-Production method of powder-

A production method of the powder is not particularly limited and may be appropriately selected depending on the intended purpose. Examples of the production method include a method where the base material is coated with the organic material according to any coating method known in the art.

The coating method for coating the particle surfaces of the base material with the organic material is not particularly limited and may be appropriately selected from coating methods known in the art. Suitable examples of the coating method include tumbling fluidized bed coating, spray drying, addition by stirring and mixing, dipping, and kneader coating. Moreover, the above-listed coating methods may be performed by means of various commercially available coating devices and granulation devices known in the art.

-Physical properties of powder-

The volume average particle diameter of the powder is not particularly limited and may be appropriately selected depending on the intended purpose. The volume average particle diameter of the powder is preferably 3 μm or greater but 250 μm or less, more preferably 3 μm or greater but 200 μm or less, even more preferably 5 μm or greater but 150 μm or less, and particularly preferably 10 μm or greater but 85 μm or less.

When the volume average particle diameter is 3 μm or greater, flowability of the powder improves, and smoothness of a surface of a layer stacked improves as the powder (or the powder layer) is easily formed. Therefore, production efficiency of a three-dimensional object tends to improve, and dimensional accuracy tends to improve, as well as improving

operability or handling. When the volume average particle diameter is 250 μm or less, gaps formed between the particles of the powder are small, thus a porosity of a three-dimensional object reduces, leading to improvement in strength of the three-dimensional object. Accordingly, the volume average particle diameter is preferably 3 um or greater but 250 μm or less for achieving both dimensional accuracy and strength.

A particle size distribution of the powder is not particularly limited and may be appropriately selected depending on the intended purpose.

An angle of repose of the powder is preferably 60° or less, more preferably 50° or less, and even more preferably 40° or less.

When the angle of repose is 60° or less, the powder can be efficiently and stably arranged in a desired area of a support.

For example, the angle of repose can be measured by means of a powder characteristics tester (POWDER TESTER PT-N, available from HOSOKAWA MICRON CORPORATION).

The powder is suitably used for simple and efficient production of various three-dimensional objects and structures. The powder is particularly suitably used for the three-dimensional forming kit of the present disclosure, the three-dimensional object producing method of the present disclosure, and a three-dimensional object producing apparatus.

A solidified product having a complicated three-dimensional shape can be simply and effectively produced with excellent dimensional accuracy only by applying the object forming liquid of the present disclosure to the powder. The solidified product obtained in the above-described manner is a green body (or a sintering precursor) having adequate hardness. Therefore, the solidified product does not deform when the solidified product is handled with hands or is placed in and out from a mold, or when excess powder is removed by air blow processing, and excellent operability and handling are achieved. The solidified product may be used as it is, or may be used as a sintering precursor to which a sintering process is further performed to form a formed product (or a sintered body of the three-dimensional object).

(Three-dimensional object producing method)

The three-dimensional object producing method of the present disclosure includes a solidified-product formation step, and a powder removal step, and may further include other steps according to the necessity.

<Solidified-product formation step>

The solidified-product formation step is a step including applying an object forming liquid to powder to bind particles of the powder together in a certain portion of the powder to form a solidified product. The powder includes a base material and an organic material.

The organic material that coats the base material is dissolved and crosslinked by the function of the object forming liquid. Once the object forming liquid is applied to the organic material, therefore, the organic material is dissolved, and is crosslinked by function of the crosslinking agent included in the object forming liquid. When a layer is formed with the powder and the object forming liquid is allowed to act on the layer of the powder, therefore, the layer is solidified.

-Formation of powder layer-

A method for arranging the powder onto a support (or onto a forming stage) to form a powder layer is not particularly limited and may be appropriately selected depending on the intended purpose. Examples of the method for arranging the powder into a layer preferably include a method using a known counter rotary system (e.g., a levelling roller), which is used in a selective laser sintering method disclosed in Japanese Patent No. 3607300, a method for spreading the powder into a layer using a member, such as a brush, a roller, and a blade, a method for pressing a surface of the powder with a press member to spread the powder into a layer, and a method using a known selective laser sintering or melting device.

For example, the powder is arranged into a layer on the substrate using a counter rotary system, a brush or a blade, or a press member as a powder layer forming unit in the following manner.

Specifically, the powder is placed on a support using a counter rotary system etc. The support is arranged inside an outer frame (may be also referred to as an "object forming tank," a "mold," a "hollow cylinder," or a "cylindrical structure") in a manner that the support can move up and down with sliding along the inner wall of the outer frame. When the support that can move up and down within the outer frame is used, the support is arranged at the position slightly below the upper edge of the opening of the outer frame, i.e., the position lower than the upper edge by a thickness of a powder layer to be formed, and then the powder is placed on the support. In the manner as described above, the powder can be arranged into a layer on the support.

Once the object forming liquid is allowed to act on the powder arranged into the layer, the layer is solidified (a solidified-product formation step).

On the obtained solidified product in the form of the layer, the powder is arranged into a layer in the same manner as described above, and the object forming liquid is allowed to act on the powder (or the powder layer) arranged on the layer. As a result, the powder is solidified. The solidification occurs, not only in the powder (or the powder layer) arranged on the layer, but also with the solidified product layer, which is positioned below the powder (or the powder layer) and has been previously solidified. As a result, obtained is a solidified product having a thickness that is about double the thickness of the powder (or the powder layer) arranged on the layer.

Moreover, the powder may be arranged into a layer on the substrate automatically and easily by means of a known three-dimensional object producing apparatus. Typically, the three-dimensional object producing apparatus includes a re-coater (e.g., a levelling roller) configured to layer the powder, a movable supply tank configured to supply the powder to the support, and a movable object forming tank configured to arrange the powder into a layer and stack layers. In a selective laser sintering or melting device, the supply tank is elevated, or the object forming tank is lowered, or the supply tank is elevated and the object forming tank is lowered to set the upper plane of the supply tank to be constantly slightly higher than the upper plane of the object forming tank. As the re-coater is repeatedly moved in the state as described, layers of the powder can be stacked.

A thickness of the powder layer is not particularly limited and may be appropriately selected depending on the intended purpose. For example, the average thickness of each powder layer is preferably 30 μm or greater but 500 μm or less, and more preferably 60 μm or greater but 300 μm or less.

When the average thickness is 30 μm or greater, strength of a solidified product (or a sintering precursor) of the powder (or the powder layer) formed by applying the object forming liquid to the powder is adequate, and a problem, such as deforming, is not caused during processes to follow, such as sintering, or during handling. When the average thickness is 500 μm or less, dimensional accuracy of a solidified product (or a sintering precursor) of the powder (or the powder layer) formed by applying the object forming liquid to the powder improves.

The average thickness is not particularly limited and may be appropriately measured according to any of methods know in the art.

A method for applying the object forming liquid, which includes the crosslinking agent capable of forming a covalent bond with a reactive functional group, to the powder (or the powder layer) is not particularly limited and may be appropriately selected depending on the intended purpose. Examples thereof include a dispensing system, a spray system, and an inkjet system. To perform any of the above-listed systems, a device known in the art can be suitably used as a solidified product forming unit.

Among the above-listed examples, the dispenser system excels in quantitativity of droplets, but gives a narrow coating area. The spray system can easily form fine ejected matter, gives a wide coating area, has excellent coatability, but has poor quantitativity of droplets and causes scattering of the powder due to a jet stream of the spray. Therefore, the inkjet system is particularly preferable in the present disclosure. The inkjet system has advantages that the inkjet system has the better quantitativity of droplets than the spray system, and gives the wider coating area than the dispenser system. The inkjet system is preferable because the inkjet system can efficiently form a complicated three-dimensional shape with high accuracy.

In the case of the inkjet system, the solidified product forming unit includes a nozzle capable of applying the object forming liquid to the powder layer according to the inkjet system. As the nozzle, a nozzle (ejection head) of an inkjet printer known in the art can be suitably used, and the inkjet printer can be suitably used as the solidified product forming unit. Examples of the inkjet printer preferably include SG7100, available from Ricoh Company Limited. The inkjet printer is preferable because an amount of the object forming liquid dropped from the head unit at once is large, a coating area is large, thus coating speed can be increased.

The present disclosure has the following advantages. Even when an inkjet printer capable of applying the object forming liquid with high accuracy and high efficiency is used, clogging does not occur in a nozzle or a nozzle head, and corrosion etc. is not caused because the object forming liquid does not include solids, such as particles, or a highly viscous material of a high molecular weight, such as a resin. When the object forming liquid is applied (or ejected) onto the powder layer, moreover, excellent production efficiency of a three-dimensional object is achieved because the object forming liquid can efficiently permeates the organic material included in the powder. Since a high molecular weight component, such as a resin, is not applied, furthermore, a volume does not increase unexpectedly, and a solidified product with high dimensional accuracy can be efficiently obtained within a short period.

<Powder removal step>

The powder removal step is a step including removing the powder, which is deposited on the solidified product, from the solidified product. A method for removing the powder, which is deposited on the solidified product, from the solidified product is preferably a method where the solidified product is immersed in a powder removal liquid. Any excess powder deposited on the surface or inner area of the solidified product can be removed by immersing the solidified product in the powder removal liquid that does not dissolve (or does not soften) the solidified product but dissolves the

organic material included in the powder.

Specifically, as the solidified product is immersed in the powder removal liquid, the forming part, which is a portion of the powder to which the object forming liquid is applied to solidify the powder, does not dissolve (or does not soften), and the non-forming part, which is a portion of the powder to which the object forming liquid is not applied, dissolves.

The three-dimensional object (or the green body), in which the solidified products are stacked, is present in the state that the three-dimensional object is imbedded in the non-forming part (or the unsolidified powder). Once the green body is taken out from the imbedded state, excess (or unsolidified) powder is deposited on the surrounding of the green body, such as the surface of the green body, and the inner area of the structure of the green body. It is difficult to remove the excess powder in a simple manner. It is even more difficult when the green body has complicated surface indentations, or has flow channels inside the green body. When a typical binder jetting system is used to form a green body, the strength of the green body is not high. Therefore, the green body may be collapsed if the pressure for air blowing is set high (0.3 MPa or greater).

The three-dimensional object (or the green body), in which the solidified products formed using the powder and the object forming liquid for use in the present disclosure are stacked, has strength that can resist against the pressure of air blowing, because the organic material is dissolved and solidified by a compound included in the object forming liquid. The compound can generate a reaction active group as heated.

The strength of the solidified product based on the three-point bending stress is preferably 3 MPa or greater, and more preferably 5 MPa or greater.

In addition to the improvement of the strength, the excess powder deposited on the surface and inner area of the green body can be easily removed by immersing the green body in the powder removal liquid because, to the powder removal liquid capable of dissolving the organic material coating the base material, the solidified organic material becomes insoluble, and the organic material, which is not solidified, stays soluble.

To form a green body having a complicated inner tube structure, particularly as illustrated in FIGs. 11 to 17, it is important to easily and surely remove the excess powder deposited on the inner area of the green body. If only air blowing is performed, air does not reach the inner area of the green body and it is difficult to remove the excess powder.

A volume of the powder removal liquid relative to the green body is not particularly limited, and may be appropriately selected depending on the intended purpose.

If the green body is softened by immersing the green body in the powder removal liquid, moreover, a three-dimensional object according to object forming data cannot be obtained due to collapse of a shape of a fine tube or a thin wall.

After immersing the green body in the powder removal liquid (e.g., the organic solvent) for 1 hour, the type 00 durometer hardness of the green body is preferably 80 or greater, more preferably 90 or greater, and even more preferably 95 or greater but 100 or less. When the type 00 durometer hardness is 80 or greater, deformation does not occur regardless of the shape of the green body.

The type 00 durometer hardness can be measured in the following manner. A test piece having the same size as Type A2 test piece of JIS K 7139 is formed. The organic solvent component in the object forming liquid is dried, and the obtained green body test piece is left to stand in a sealed container in a state that the entire surface of the green body test piece is immersed in the powder removal liquid at 25°C for 1 hour under atmospheric pressure. Thereafter, the green body test piece is taken out from the container. In the state that the powder removal liquid deposited on the surface of the green body test piece is wiped off, the green body test piece is directly left on an A5052 plate having a plate thickness of 5 mm. Within 30 seconds from the time when the green body test piece is taken out from the container, a pressurizing face of the type 00 durometer according to ASTM D 2240 is closely pressed against the test piece at 25°C under atmospheric pressure by pushing the type 00 durometer by hand to measure the hardness.

The duration for the immersion is preferably from 1 hour through 3 hours.

The immersion temperature is preferably from room temperature (25°C) through 50°C.

Examples of the immersion method include standing, ultrasonic irradiation, stirring, and stirring after standing.

-Powder accommodating unit-

The powder accommodating unit is a unit in which the powder is accommodated. A size, shape, material, etc. of the powder accommodating unit are not particularly limited and may be appropriately selected depending on the intended purpose. Examples of the accommodating unit include a storage chamber, a bag, a cartridge, and a tank.

-Object forming liquid accommodating unit-

The object forming liquid accommodating unit is a unit in which the object forming liquid is accommodated. A size, shape, material, etc. of the object forming liquid accommodating unit are not particularly limited and may be

appropriately selected depending on the intended purpose. Examples of the object forming liquid accommodating unit include a storage chamber, a bag, a cartridge, and a tank.

<Other steps and other units>

Examples of other steps include a sintering step, a surface protection treatment step, and a coating step.

Examples of other units include a sintering unit, a surface protection treatment unit, and a coating unit.

The drying step is a step including drying the three-dimensional object (or the green body), in which the solidified products are stacked, obtained in solidified-product formation step. In the drying step, not only the moisture included in the green body, but also organic matter therein may be removed (which is called delipidation). Examples of the drying unit include driers known in the art, and thermohygrostats known in the art.

The sintering step is a step including sintering the three-dimensional object (or the green body), in which the solidified products are stacked, formed in the solidified-product formation step. As the sintering step is performed, the green body is formed into a formed object (or a sintered body of the three-dimensional object) of a metal or ceramic, which is densified and integrated. Examples of the sintering unit include sintering furnaces known in the art.

The surface protection treatment step is a step including forming a protective layer on the three-dimensional object (or the green body), in which the solidified products are stacked, formed in the solidified-product formation step. As the surface protection treatment step is performed, durability etc. can be imparted to the surface of the solidified product, for example, to the extent that the solidified product can be used as it is. Specific examples of the protective layer include a water proof layer, a weather resistant layer, a light resistance layer, a thermal insulation layer, and a gloss layer. Examples of the surface protection treatment unit include surface protection treatment devices known in the art (e.g., a spraying device, and a coating device).

The coating step is a step including coating the three-dimensional object (or the green body), in which the solidified products are stacked, formed in the solidified-product formation step. As the color coating step is performed, the green body can be colored in a desired color. Examples of the coating unit include coating devices known in the art (e.g., a spray coater, a roller coater, and a brush coater).

A mass of the organic material included in the sintered body after the sintering step is preferably 5% by mass or less relative to a mass of the organic material included in the green body before the powder removal step.

One embodiment of the three-dimensional object producing method of the present disclosure and the three-dimensional object producing apparatus will be described with reference to FIG. 7. FIG. 7 illustrates one specific point in time during the forming.

The three-dimensional object producing apparatus of FIG. 7 includes a supply tank 21, an object forming tank 22, and an excess powder recovery tank 29. The supply tank 21 and the object forming tank 22 have a supply stage 23 and an object forming stage 24, respectively. Both the supply stage 23 and the object forming stage 24 are configured to move up and down. Powder 20 for three-dimensional object forming is arranged on the object forming stage 24 disposed in the object forming tank 22 to form a powder layer 31 formed of the powder 20.

A levelling roller 12 is disposed above the supply tank 21 and the object forming tank 22. The levelling roller 12 is configured to level a surface of the powder 20 in the object forming tank 22 to form the powder layer 31, as well as supplying the powder 20 from the supply tank 21 to the object forming tank 22. At the levelling roller 12, a powder removal plate 13 is disposed. The powder removal plate 13 is configured to meet the circumferential surface of the levelling roller 12 to remove the powder 20 deposited on the levelling roller 12. Within the portion of the powder 20 transferred and supplied by the levelling roller 12, the excess powder 20 that has not been used for formation of the powder layer 31 drops into the excess powder recovery tank 29.

An inkjet head 52 is disposed above the object forming tank 22. Th inkjet head 52 is configured to eject the object forming liquid 10 towards the powder 20 in the object forming tank 22. Droplets are ejected and applied from the inkjet head 52 to the powder layer 31 to form an object forming layer 30. The powder layer 31 is the powder packed in the formed of a layer in the object forming tank 22.

The position for dripping the object forming liquid 10 is determined according to two-dimensional image data (e.g., slice data) including information of several flat layers obtained by slicing a final three-dimensional shape to be formed.

After completing the drawing for one layer, the supply stage 23 of the supply tank 21 is elevated, and the object forming stage 24 of the object forming tank 22 is lowered. The powder to fill the gap created by the movement of the stages is transferred into the object forming tank 22 by the levelling roller 12.

As described above, a new powder layer is formed on the surface of the previously drawn powder layer. A thickness of one powder layer is about several ten micrometers or greater but about 100 $\mu$m or less.

Drawing is performed on the newly formed powder layer based on the slice data for the second layer. A series of the above-described processes are repeated to obtain a solidified product (or a green body) having a three-dimensional shape.

Next, a flow of object forming according to the three-dimensional object producing method of the present disclosure will be described with reference to FIGs. 8A to 8E.

FIGs. 8A to 8E are schematic explanatory views illustrating a flow of object forming. The description begins with the state where a first object forming layer 30 is formed on the object forming stage 24 of the object forming tank 22. When a sequential object forming layer is formed on the first object forming layer 30, the supply stage 23 of the supply tank 21 is elevated, and the object forming stage 24 of the object forming tank 22 is lowered as illustrated in FIG. 8A.

The distance of the object forming stage 24 to lower is set in a manner that a gap (or a layering pitch) between the upper surface of the powder layer 31 (or the powder surface) in the object forming tank 22 and the bottom (or the lower tangent part) of the levelling roller 12 is to be $\Delta t1$. The gap $\Delta t1$ is not particularly limited, but the gap $\Delta t1$ is preferably from about several ten micrometers through about 100 $\mu$m.

Subsequently, the powder that is present above the upper plane level of the supply tank 21 is moved to the side of the object forming tank 22 by rotating the leveling roller 12 in the reverse direction, which is the direction indicated with the arrow, to transfer and supply the powder 20 into the object forming tank 22, as illustrated in FIG. 8B. The process as described is referred to as powder supply.

As illustrated in FIG. 8C, moreover, the levelling roller 12 is moved horizontally relative to the stage surface of the object forming stage 24 of the object forming tank 22 to form a powder layer 31 having a predetermined thickness $\Delta t1$ on the object forming stage 24 of the object forming tank 22. The process as described is referred to as levelling. As the levelling is performed, the excess powder 20 that has not been used for formation of the powder layer 31 drops into the excess powder recovery tank 29.

After formation of the powder layer 31, the levelling roller 12 is moved to the side of the supply tank 21 to return to (or reset in) the initial position (or the original position), as illustrated FIG. 8D.

Thereafter, droplets 10 of the object forming liquid are ejected from the head 52 of the liquid ejection unit 50 to deposit and form an object forming layer 30 having a desired shape in the powder layer 31, as illustrated in FIG. 8E.

Subsequently, the above-described powder layer formation and ejection of the object forming liquid are repeated to form a new object forming layer 30. The new object forming layer 30 and the object forming layer 30 present below are integrated to constitute part of a solidified product. Thereafter, powder layer formation and object forming liquid ejection are repeated to complete object forming of a solidified product (or a green body).

According to the three-dimensional forming object producing method of the present disclosure and by means of the three-dimensional object producing apparatus as described above, a three-dimensional object of a complicated three-dimensional (3D) shape can be simply and efficiently produced at high dimensional accuracy using the object forming liquid of the present disclosure or the three-dimensional forming kit of the present disclosure without deformation before sintering.

The three-dimensional object obtained in the above-described manner and a sintered body thereof have adequate strength and excellent dimensional accuracy, and can reproduce minute indentations, curvatures, etc. Therefore, the three-dimensional object and the sintered body achieve excellent aesthetic appearance and high quality, and can suitably applied to various use.

## Examples

The present disclosure will be described below by way of Examples. The present disclosure should not be construed as being limited to these Examples.

### (Preparation Example 1 of Coating Liquid)

-Preparation of Coating Liquid 1-

With 6 parts by mass of a polyacrylic polyol resin (9515, available from Toeikasei Co., Ltd.) having a hydroxyl value of 180 mgKOH/g serving as an organic material, 114 parts by mass of acetone was mixed. The mixture was stirred for 1 hour by means of a three-one motor (BL600, available from Shinto Scientific Co., Ltd.) with heating to 50°C in a water bath to dissolve the polyacrylic polyol resin in the organic solvent (i.e., acetone), to thereby prepare 120 parts by mass of a 5% by mass polyacrylic polyol solution. The solution prepared in the above-described manner was provided as Coating Liquid 1.

The viscosity of the 5% by mass (w/w%) polyacrylic polyol resin solution at 25°C was measured by mean of a viscometer (DV-E VISCOMETER HADVE 115, Rotary Viscometer, available from Brookfield Co., Ltd.). As a result, the viscosity was in the range of from 3.0 mPa·s to 4.0 mPa·s.

(Preparation Example 2 of Coating Liquid)

-Preparation of Coating Liquid 2-

With 6 parts by mass of a polyvinyl butyral resin (BL-10, available from SEKISUI CHEMICAL CO., LTD.) having a hydroxyl value of 73 mgKOH/g serving as an organic material, 114 parts by mass of methyl ethyl ketone was mixed. The mixture was stirred for 1 hour by means of a three-one motor (BL600, available from Shinto Scientific Co., Ltd.) with heating to 40°C in a water bath to dissolve the polyvinyl butyral in the organic solvent (i.e., methyl ethyl ketone), to thereby prepare 120 parts by mass of a 5% by mass polyvinyl butyral resin solution. The solution prepared in the above-described manner was provided as Coating Liquid 2.

The viscosity of the 5% by mass (w/w%) polyvinyl butyral resin solution at 25°C was measured by means of a viscometer (DV-E VISCOMETER HADVE 115, Rotary Viscometer, available from Brookfield Co., Ltd.). As a result, the viscosity was in the range of from 9.0 mPa·s to 10.0 mPa·s.

(Preparation Example 1 of Powder)

<Preparation of Powder 1>

-Coating surface of base material with coating liquid-

Next, 100 parts by mass of $AlSi_{10}Mg$ powder ($Si_{10}Mg$-30BB, available from TOYO ALUMINIUM K.K., volume average particle diameter: 35 μm) serving as a base material was coated with Coating Liquid 1 to give a coating thickness (i.e., an average thickness) of 300 nm by means of a commercially available coating device (MP-01, available from Paulec Co., Ltd.). During the coating, sampling was timely performed in the middle of the coating, and the coating duration and coating intervals were appropriately adjusted in a manner that the coating thickness (i.e., the average thickness) of Coating Liquid 1 was to be 300 nm and the surface coverage rate (%) was to be 85%.

After completing the coating, acrylic resin particles (MP1451, available from Soken Chemical & Engineering Co., Ltd.) were added to the surface of the coating film to achieve the surface coverage rate of 20%, followed by mixing for 5 minutes at 100 rpm by means of a mixer (DYNO-MILL, by means of Shinmaru Enterprises Corporation), to thereby obtain Powder 1. The measuring methods of the thickness of the coating film and the surface coverage rate with the coating film, and the coating conditions are presented below. The measurements of the thickness of the coating film, and the surface coverage rate with the coating film were performed before mixing the powder with resin particles.

<Coating thickness (average thickness) of coating film>

To determine a coating thickness (i.e., an average thickness) of Powder 1, a two-part epoxy resin and the coated powder were kneaded together, followed by curing the epoxy resin. After curing the epoxy resin, the cured resin was cut by a knife to expose a cross-section, and the cut cross-section was polished by an ion milling device (IM4000PLUS, available from Hitachi High-Tech Corporation) to thereby produce a sample for observation. Next, the boundary portion between the base material portion and the organic soluble resin portion exposed on the cut surface was observed under a field emission-scanning electron microscope (FE-SEM), and the boundary portion was measured as the coating thickness. The coating thickness was measured at 10 points, and an average value of the measured values obtained from 10 points was calculated. The average value was determined as the coating thickness (i.e., the average thickness). The determined coating thickness (i.e., the average thickness) of Powder 1 was 250 nm.

<Surface coverage rate with coating film>

A backscattered electron image (ESB) was captured using a field emission-scanning electron microscope (FE-SEM) under the following conditions with a field of view settings to capture about 10 particles of Powder 1 within a screen, and binarization was performed by image processing using Image J software. The coverage rate per particle was determined by the formula represented by an area of a black portion/ (the area of the black portion + an area of a white portion) ×100. In the formula, the black portion was the coated portion, and the white portion was the base material portion. The measurement was performed on 10 particles, and an average value of the measured values was determined as a surface coverage rate (%). The surface coverage rate of Powder 1 was 70%.

-SEM observation conditions-

Signal: backscattered electron image (ESB)
EHT: 0.80 kV
ESB Grid: 700 V
WD: 3.0 mm
Aperture Size: 30.00 μm
Contrast: 80%
Magnification: Setting per sample to capture about 10 particles along the lateral direction of the image

<Coating conditions>

Spray settings

Nozzle type: 970
Nozzle diameter: 1.2 mm
Coating liquid jet pressure: 4.7 Pa·s
Coating liquid jet speed: 3 g/min
Amount of air used for atomizing: 50 NL/min
Rotary settings
Rotor model: M-1
Rotational speed: 60 rpm
Number of rotations: 400%
Air flow settings
Feeding air temperature: 80°C
Air feeding rate: 0.8 $m^3$/min
Bag filter dusting pressure: 0.2 MPa
Bag filter dusting duration: 0.3 seconds
Bag filter interval: 5 seconds
Coating duration: 40 minutes

The average particle diameter of Powder 1 obtained was measured by means of a commercially available particle size analyzer (MICROTRACK HRA, available from Nikkiso Co., Ltd.). The average particle diameter was 35 μm.

(Preparation Example 2 of Powder)

<Preparation of Powder 2>

Powder 2 was prepared in the same manner as in Preparation Example 1 of Powder, except that Coating Liquid 1 was replaced with Coating Liquid 2.

The measurements were performed in the same manner as in Preparation Example 1 of Powder. As a result, the coating thickness (i.e., the average thickness) of Powder 2 was 250 nm, the surface coverage rate of Powder 2 was 80%, and the average particle diameter of Powder 2 was 37 um.

(Preparation Example 1 of Object Forming Liquid)

-Preparation of Object Forming Liquid 1-

Polyisocyanate (aliphatic polyisocyanate, available from Mitsui Chemicals, Inc.) composed of 1,5-pentamethylenediixocyanate serving as a crosslinking agent and butyl acetate (available from FUJIFILM Wako Pure Chemical Corporation) were blended in a manner that the amount of the crosslinking agent was to be 50% by mass of a total amount of an object forming liquid. The mixture was dispersed for 30 minutes by means of a homomixer, to thereby prepare Object Forming Liquid 1.

(Preparation Example 2 of Object Forming Liquid)

-Preparation of Object Forming Liquid 2-

Polyisocyanate (aliphatic poly isocyanate, available from Mitsui Chemicals, Inc.) composed of 1,5-pentamethylenediixocyanate serving as a crosslinking agent and butyl acetate (available from FUJIFILM Wako Pure Chemical Corporation) were blended in a manner that the amount of the crosslinking agent was to be 12.6% by mass of a total amount of an object forming liquid. The mixture was dispersed for 30 minutes by means of a homomixer, to thereby prepare Object Forming Liquid 2.

(Preparation Example 3 of Object Forming Liquid)

-Preparation of Object Forming Liquid 3-

Polyvinylpyrrolidone K30 (available from FUJIFILM Wako Pure Chemical Corporation) and TRIGLYME (available from Tokyo Chemical Industry Co., Ltd.) were blended in a manner that the amount of the polyvinylpyrrolidone K30 was to be 15% by mass relative to a total amount of an object forming liquid. The mixture was dispersed for 30 minutes by means of a homomixer, to thereby prepare Object Forming Liquid 3.

(Preparation Example 4 of Object Forming Liquid)

-Preparation of Object Forming Liquid 4-

A terpene phenol resin (YS Polyester T100, available from YASUHARA CHEMICAL CO., LTD.) and γ-butyrolactone (available from Mitsubishi Chemical Corporation) were blended in a manner that the terpene phenol was to be 15% by mass relative to a total amount of an object forming liquid. The mixture was dispersed for 30 minutes by means of a homomixer, to thereby prepare Object Forming Liquid 4.

(Example 1)

A three-dimensional object was produced according to a printing pattern of a shape in the size of 70 mm in length, and 12 mm in width in the following manner using Powder 1 and Object Forming Liquid 1.

1) First, Powder 1 was transferred from a supply tank to an object forming tank, and a layer of Powder 1 having the average thickness of 100 μm was formed on an object forming stage by means of a three-dimensional object producing apparatus as illustrated in FIG. 7.
2) Next, Object Forming Liquid 1 was applied (or ejected) from a nozzle of an inkjet ejection head known in the art onto the surface of the formed layer of Powder 1 to dissolve the polyacrylic polyol resin with the butyl acetate included in Object Forming Liquid 1. The degree of crosslinking was adjusted so that 20% of all the hydroxyl groups included in the polyacrylic polyol resin was crosslinked by the function of the polyisocanate (aliphatic polyisocyanate, available from Mitsui Chemicals, Inc.) composed of 1,5-pentamethylenediixocyanate included in Object Forming Liquid 1 (degree of crosslinking: 20%).
The method for adjusting the degree of crosslinking was as follows. Since the amount of the deposited resin on Powder 1 was 1% by mass, the resin solid content in Powder 1 was 3 g, when the entire amount, 300 g, of Powder 1 was used for object forming. Since the hydroxyl value was 180 mg/gKOH, a weight of the hydroxyl groups was 180*3/56.1 (formula weight of KOH) = 9.63 mmol. To adjust the degree of crosslinking, 1.93 mmol of the hydroxyl groups, which was about 20% relative to the total amount of the hydroxyl groups, were to be crosslinked. The solid content of the crosslinking agent used was 75.4% by mass, and the concentration of NCO was 12.6% by mass. Therefore, the NCO solid content was 12.6/75.4*100 = 16.7% by mass. Amount of crosslinking agent to be used (g) = 20% of hydroxyl groups [1.93 (mmol)]/crosslinking agent concentration [100(% by mass)] * 100 * solid content in crosslinking agent [75.4(% by mass)] * 100 * NCO solid content [16.7(% by mass)] * 100 * 42 (formula weight of NCO) * 1,000
3) Next, the procedures 1) and 2) were repeated until the average total thickness reached the predetermined thickness, 5 mm, to sequentially stack layers of the solidified powder. The resultant was dried at 50°C for 4 hours, and then dried at 100°C for 2 hours by means of a drier to perform a drying step, to thereby obtain a solidified product (or a green body).
4) After removing the excess powder from the dried solidified product (or the green body) by air blowing, the solidified product was left to stand in a sealed container in a state that the solidified product was immersed in a powder

removal liquid (i.e., acetone) at 25°C for 1 hour under atmospheric pressure. Thereafter, the solidified product was taken out from the container, and dried at 100°C for 2 hours in vacuum.

Next, "wet strength," "strength after drying" and "solubility" of the obtained solidified product (or the green body) were evaluated in the following manner. The results are presented in Table 2.

<Wet strength>

After leaving the solidified product (or the green body) to stand in a sealed container in a state that the solidified product (or the green body) was immersed in the powder removal liquid (i.e., acetone) at 25°C for 1 hour under atmospheric pressure in 4), the solidified product (or the green body) was taken out from the container, and the powder removal liquid deposited on the surface of the solidified product (or the green body) was wiped off by pressing a dry piece of paper towel against the solidified product (or the green body) for 5 seconds. The solidified product (or the green body) was directly left on an A5052 plate having a plate thickness of 5 mm. Within 30 seconds from the wiping, a pressurizing face of the type 00 durometer (GS-754G, available from TECLOCK Co., Ltd.) according to ASTM D 2240 was closely pressed against the solidified product (or the green body) at 25°C under atmospheric pressure by pushing by hand, the measured value on the type 00 durometer was read, and the wet strength was evaluated according to the following criteria.

[Evaluation criteria]

Rank 5: The displayed value of the type 00 durometer was 95 or greater.
Rank 4: The displayed value of the type 00 durometer was 90 or greater but less than 95.
Rank 3: The displayed value of the type 00 durometer was 80 or greater but less than 90.
Rank 2: The displayed value of the type 00 durometer was 60 or greater but less than 80.
Rank 1: The displayed value of the type 00 durometer was less than 60.

<Strength after drying>

After leaving the solidified product (or the green body) to stand in a sealed container in a state that the solidified product (or the green body) was immersed in the powder removal liquid (i.e., acetone) at 25°C for 1 hour under atmospheric pressure in 4), the solidified product (or the green body) was taken out from the container. After vacuum drying the solidified product (or the green body) at 100°C for 2 hours to adequately remove the deposited powder removal liquid from the solidified product (or the green body), three-point bending strength of the solidified product (or the green body) was measured by means of GS-754G, available from TECLOCK Co., Ltd. Strength after drying was evaluated from the measured value of the three-point bending strength based on the following criteria.

[Evaluation criteria]

Rank 5: The three-point bending strength was 8 MPa or greater.
Rank 4: The three-point bending strength was 7 MPa or greater but less than 8 MPa.
Rank 3: The three-point bending strength was 6 MPa or greater but less than 7 MPa.
Rank 2: The three-point bending strength was 5 MPa or greater but less than 6 MPa.
Rank 1: The three-point bending strength was less than 5 MPa.

<Solubility>

The organic material and the powder removal liquid (i.e., acetone) were weighed and collected in a 20 mL vial to form a 1% by mass polymer solution (total amount: 5 g) of the single component of the organic material (i.e., the resin). Ultrasonic waves were applied to make the solution vibrate at 40°C for 10 hours to process the solution, and solubility was evaluated based on the following criteria.

[Evaluation criteria]

Rank 3: dissolved
Rank 2: clouded
Rank 1: solids remained, whitened, and swollen

(Examples 2 to 18 and Comparative Examples 1 to 5)

Evaluations were performed in the same manner as in Example 1, except that the powder removal liquid (i.e., acetone) was replaced with the organic solvent presented in Table 1. The results are presented in Table 3.

(Examples 19 to 23 and Comparative Examples 6 to 9)

Evaluations were performed in the same manner as in Example 1, except that Powder 2 and Object Forming Liquid 2 were used, and the powder removal liquid (i.e., acetone) was replaced with the organic solvent presented in Table 1. The results were presented in Table 3.

In Examples 19 to 23 and Comparative Examples 6 to 9, the degree of crosslinking was adjusted to 20%.

(Examples 24 to 27 and Comparative Examples 10 to 13)

Evaluations were performed in the same manner as in Example 1, except that $AlSi_{10}Mg$ powder ($Si_{10}Mg$-30BB, available from TOYO ALUMINIUM K.K., volume average particle diameter: 35 μm) serving as a base material without coating, and Object Forming Liquid 3 were used, and the powder removal liquid (i.e., acetone) was replaced with the organic solvent presented in Table 1. The results are presented in Table 3.

(Examples 28 to 31 and Comparative Examples 14 to 17)

Evaluations were performed in the same manner as in Example 1, except that $AlSi_{10}Mg$ powder ($Si_{10}Mg$-30BB, available from TOYO ALUMINIUM K.K., volume average particle diameter: 35 pm) serving as a base material without coating, and Object Forming Liquid 4 were used, and the powder removal liquid (i.e., acetone) was replaced with the organic solvent presented in table 1. The results are presented in Table 3.

<Calculations of RED value of forming part and RED value of non-forming part>

Next, HSP values of a forming part, HSP values of the powder removal liquid (i.e., the organic solvent), HSP values of a non-forming part, and an interaction radius $R_1$ of the non-forming part were determined in the following manner. The forming part was a portion of the powder to which the object forming liquid was applied, and the non-forming part was a portion of the powder to which the object forming liquid was not applied. The results are presented in Table 2.

Next, the RED value of the forming part and the RED value of the non-forming part of each of Examples 1 to 31 and Comparative Examples 1 to 17 were calculated based on the HSP values of the forming part, the HSP values of the powder removal liquid (i.e., the organic solvent), the HSP values and the non-forming part, and the interaction radius $R_1$ of the non-forming part. The results are presented in Table 3. FIG. 9 is a graph depicting a relationship between the RED value of the non-forming part and solubility in Examples and Comparative Examples. FIG. 10 is a graph depicting a relationship between the RED value of the forming part and wet strength in Examples and Comparative Examples.

-HSP values of powder removal liquid (organic solvent)-

The HSP values of the powder removal liquid (i.e., the organic solvent) were determined by searching in and attaining from the database. If the HSP values were not in the database, the HSP values of the powder removal liquid (i.e., the organic solvent) were determined by calculating from the chemical structure of the organic solvent using Hansen solubility parameters calculation software HSPiP (ver. 5.2, available from Hansen-Solublity.com). The results are presented in Table 2.

-Determination method of HSP values of non-forming part-

The HSP values of the non-forming part can be determined experimentally according to the method proposed by Hansen (C. M. Hansen, "Hansen solubility parameters: A user's handbook," 2nd edn., CRC Press, Boca Raton (2007)). The method is as described as follows.

An organic material and an organic solvent were weighed and collected in a 20 mL vial to form a 1% by mass polymer solution (total amount: 5 g) of the organic material (i.e., the resin) of the non-forming part as a sample. Ultrasonic

vibrations are applied to the solution at 40°C for 10 hours to process the solution. After the processing, the organic material was determined as being insoluble when precipitation of suspended solids was observed, and was determined as being soluble when the organic material was dissolved. The same procedure was carried out against 24 types of organic solvents, and the results of solubility or insolubility were input to commercially available Hansen solubility parameters calculation software, such as HSPiP, to determine HSP values (non-forming part). A combination of the input to the HSPiP and calculation were performed 10 times, and the average values obtained were determined as HSP values (non-forming part) and interaction radius $R_1$ of the non-forming part, respectively. The results are presented in Table 2.

The 24 organic solvents were 1,4-dioxane, 1-butanol, 2-phenoxyethanol, acetone, acetonitrile, cyclohexane, cyclohexanol, diacetone alcohol, diethylene glycol, dimethylformamide, dimethyl sulfoxide, ethanol, ethyl acetate, γ-butyrolactone, methyl ethyl ketone, methanol, methyl isobutyl ketone (2-butanone), butyl acetate, N-methylpyrrolidone, propylene glycol monomethyl ether, propylene glycol monomethyl ether acetate, propylene carbonate, tetrahydrofuran, and toluene.

-Determination method of RED value of non-forming part-

The RED value of the non-forming part, which was a distance between the HSP values of the non-forming part and the HSP values of the organic solvent, was determined from the HSP values (non-forming part) determined in the above-described manner, the interaction radius $R_1$ of the non-forming part, and the HSP values of the organic solvent in the powder removal liquid according to the following mathematical equation (2). The non-forming part was a portion of the powder to which the object forming liquid was not applied. The results are presented in Table 3.

[Mathematical equation (2)]

$$\text{RED value of the non-forming part} = \{4*(dD_1-dD_S)^2+(dP_1-dP_S)^2+(dH_1-dH_S)^2\}^{0.5}/R_1$$

In the mathematical equation (2), $dD_1$ is a dispersion component of the HSP values of the non-forming part, $dD_S$ is a dispersion component of the HSP values of the organic solvent included in the powder removal liquid, $dP_1$ is a polarity component of the HSP values of the non-forming part, $dP_S$ is a polarity component of the HSP values of the organic solvent included in the powder removal liquid, $dH_1$ is a hydrogen bonding component of the HSP values of the non-forming part, $dH_S$ is a hydrogen bonding component of the HSP values of the organic solvent included in the powder removal liquid, and $R_1$ is an interaction radius of the HSP values of the non-forming part.

-Determination method of HSP values of forming part-

The HSP values of the forming part, when the crosslinking agent was included in each of the object forming liquids of Examples 1 to 23 and Comparative Examples 1 to 9, was determined based on the flowchart of FIG. 6. The results are presented in Table 2.

When each of the object forming liquids of Examples 24 to 31 and Comparative Examples 10 to 17 included the organic material but did not include the crosslinking agent, the HSP values in the polymer database of the organic material were used as the HSP values of the forming part if the HSP values of the organic material were already known. If the HSP values of the organic material were not known, the organic material was separated by removing the solvent according to an arbitrary method, and the isolated organic material was used on its own to determine HSP values of the forming part according to the method described in "Determination method of HSP values of non-forming part" (see the paragraph [0147]). The results are presented in Table 2.

-Determination method of RED value of forming part-

Based on the HSP values (forming part), the interaction radius $R_1$ of the non-forming part, and the HSP values of the organic solvent included in the powder removal liquid determined in the above-described manner, a RED value of the forming part was determined according to the following mathematical equation (3). The RED value of the forming part was a distance between the HSP values of the forming part and the HSP values of the organic solvent included in the powder removal liquid. The forming part was a portion of the powder to which the object forming liquid was applied. The results are presented in Table 3.

[Mathematical equation (3)]

$$\text{RED value of the forming part} = \{4*(dD_2-dD_S)^2+(dP_2-dP_S)^2+(dH_2-dH_S)^2\}^{0.5}/R_2$$

In the mathematical equation (3), $dD_2$ is a dispersion component of the HSP values of the forming part, $dD_S$ is a dispersion component of the HSP values of the organic solvent included in the powder removal liquid, $dP_2$ is a polarity component of the HSP values of the forming part, dPs is a polarity component of the HSP values of the organic solvent included in the powder removal liquid, $dH_2$ is a hydrogen bonding component of the HSP values of the forming part, dHs is a hydrogen bonding component of the HSP values of the organic solvent included in the powder removal liquid, and $R_2$ is the interaction radius $R_1$ of the HSP values of the non-forming part when the organic material is crosslinked, and is an interaction radius of the HSP values of the forming part when the organic material is not crosslinked.

Based on the Hansen solubility theory, essentially, it is ideal to use the interaction radius of the HSP values of the forming part to calculate the RED value of the forming part. When the organic material is crosslinked, however, the interaction radius $R_1$ of the HSP values of the non-forming part is used for calculation of the RED value of the forming part, because the interaction radius $R_1$ of the HSP values of the non-forming part is determined experimentally as a non-forming part (i.e., the organic material before crosslinking) and can be treated as a constant.

When the organic material is not crosslinked, conversely, the interaction radius $R_2$ of the HSP values of the forming part is used for calculation of the RED value of the forming part because the interaction radius $R_2$ of the HSP values of the forming part can be determined by the method described in "Determination method of HSP values of non-forming part" above.

Next, a specific method for determining the HSP values (##) of the forming part of Example 1 will be described. "##" is a degree of crosslinking of the polymer. In Examples 2 to 18 and Comparative Examples 1 to 5, a RED value of the forming part was determined in the same manner as in Example 1.

<Determination method of RED value of forming part of Example 1>

As presented in the following reaction formula, Polymer X (polyacrylic polyol resin, hydroxyl value: 180 KOHmg/g) having ethanol at a terminal, which was used as an organic material, and hydrogenated TDI (CAS:10581-16-5), which was used as a crosslinking agent, were crosslinked via urethane bonds.

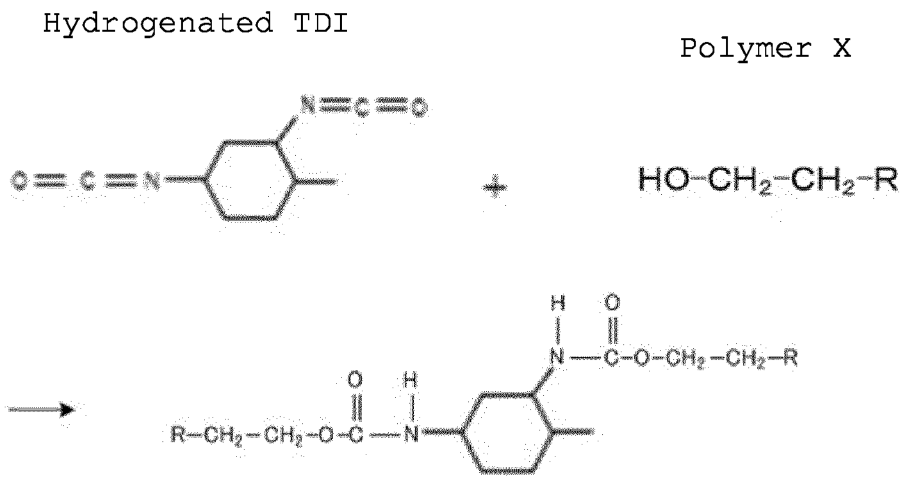


Each fragment of the reaction formula above is represented by the following chemical formula.

| Polymer X | Ethanol fragment (EtF) | Fragment of polymer X (XF) |
|---|---|---|
| $HO-CH_2-CH_2-R$ | $HO-CH_2-CH_2-$ | $-R$ |

Crosslinked fragment by TDI (TF)

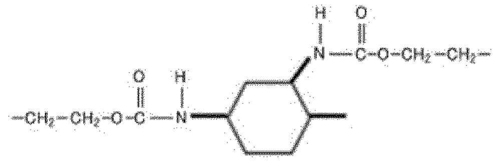

As described above, the HSP values of Polymer X could be determined by inputting the results of solubility or insolubility to the 24 organic solvents to the Hansen solubility parameters calculation software HSPiP (ver. 5.2, available from Hansen-Solublity.com). The HSP values ($dD_x$, $dP_x$, $dH_x$) and $R_1$ of Polymer (X) were (20.27 [$MPa^{0.5}$], 12.38 [$MPa^{0.5}$], 10.19 [$MPa^{0.5}$]), and 9.8, respectively.

The HSP values (EtF) of the ethanol fragment could be calculated from the structure of the ethanol fragment using the Hansen solubility parameters calculation software HSPiP. The HSP values (EtF) ($dD_{EtF}$, $dP_{EtF}$, $dH_{EtF}$) of the ethanol fragment were (15.6 [$MPa^{0.5}$], 9.3 [$MPa^{0.5}$], 17.2[$MPa^{0.5}$]).

The HSP values (TF) of the crosslinked fragment of the hydrogenated TDI could be determined from the structure of the crosslinked fragment using the Hansen solubility parameters calculation software HSPiP. The HSP values (TF) ($dD_{TF}$, $dP_{TF}$, $dH_{TF}$) of the crosslinked fragment of the hydrogenated TDI were (17.6 [$MPa^{0-5}$], 9.8 [$MPa^{0-5}$], 6.7 [$MPa^{0.5}$]).

Since the HSP values (XF) of the fragment of Polymer X could be treated as a mixed multiple substance system where the HSP values (X) captured both the HSP values (XF) and the HSP values (EtF), the HSP values (XF) could be determined by mass fractions in which the HSP values (EtF) were subtracted from the HSP values (X), respectively.

Since Polymer X had the hydroxyl value of 180 mgKOH/g, Polymer X had 0.003208 mol/g of hydroxyl groups. Therefore, the following calculation was performed:

$$0.003208\ \text{mol/g} * 45\ \text{(molecular weight of EtF)} * 100 = 14$$

Meaning that, Polymer X included 14% by mass of EtF.

Since Polymer X was composed of EtF and XF, XF constituted the remaining 86% by mass.

Since the HSP values (X) and the HSP values (EtF) were already known, the dispersion component $dD_{XF}$ of the HSP values (XF) was determined by a mass fraction:

$$dD_{XF} = \{dD_{EtF} - 0.14 * dD_X\}/0.86 = (15.6 - 0.14 * 20.27)/0.86 = 21.06$$

The polarity component $dP_{XF}$ of the HSP values (XF) and the hydrogen bonding component $dH_{XF}$ of the HSP values (XF) were also determined in the same manner. The polarity component $dP_{XF}$ was 12.90 [$MPa^{0-5}$], and the hydrogen bonding component $dH_{XF}$ was 9.01 [$MPa^{0.5}$].

Next, the HSP values of the forming part (degree of crosslinking ## of Polymer X) were determined from the above-determined HSP values (X), HSP values (XF), and HSP values (EtF), and the degree of crosslinking ## of Polymer X.

In the case of the HSP values (100) of the forming part where the degree of crosslinking ## of Polymer X was 100%, all the EtF within Polymer X were reacted to be TF. Therefore, the ratio of the crosslinked fragment due to TDI was calculated as follows based on that the hydroxyl value of Polymer X was 180 mgKOH/g, i.e., the amount of hydroxyl groups was 0.003208 mol/g.

$$0.003208\ \text{mol/g} * 270\ \text{(molecular weight of TF)}/2\ \text{(as TF had 2 crosslink points)} * 100 = 43$$

Meaning that, the ratio of the crosslinked fragment due to TDI was 43% by mass. The remaining 57% by mass stayed as XF without being used for crosslinking.

As described above, the dispersion component ($dD_{100}$), polarity component ($dP_{100}$), and hydrogen bonding component ($dH_{100}$) of the HSP values (100) of Polymer X whose degree of crosslinking ## was 100% were determined as [19.6, 11.6, 8.0] from the following equation:

$$\text{Dispersion component } (dD_{100}),\ \text{polarity component } (dP_{100}),\ \text{hydrogen bonding component } (dH_{100}) = [(0.43*dD_{TF}+0.57*dD_{XF}),\ (0.43*dP_{TF}+0.57*dP_{XF}),\ (0.43*dH_{TF}+0.57*dH_{XF})]$$

The values [19.6, 11.6, 8.0] were determined as $dD_{100}$, $dP_{100}$, $dH_{100}$, respectively.

When the HSP values (20) of Polymer X whose degree of crosslinking ## was 20% were determined, 80% remained as Polymer X, thus the values [20.1, 12.2, 9.8] were determined from the following equation:

$$(\text{Dispersion component } (dD_{MIX}),\ \text{polarity component } (dP_{MIX}),\ \text{hydrogen bonding component } (dH_{MIX})) = [0.8*dD_x+0.2*dD_{100},\ 0.8*dP_x+0.2*dP_{100},\ 0.8*dH_x+0.2*dH_{100}]$$

Based on the results above, a RED value of the forming part of Example 1 where the degree of crosslinking ## of Polymer X was 20% was determined according to the mathematical equation (3) in the following manner.

$$\{4*(dD_{MIX}-dD_{acetone})^2+(dP_{MIX}-dP_{acetone})^2+(dH_{1IX}-dH_{acetone})^2\}^{0.5}/R_1 = \{4*(20.1-15.5)^2+(12.2-10.4)^2+(9.8-7.0)^2\}^{0.5}/11.67 = 0.84$$

Based on the Hansen solubility theory, essentially, it is ideal to use the interaction radius of the HSP values (##) of the forming part to calculate a RED value of a forming part. However, $R_1$ was known through the experiment as materials before crosslinking and could be handled as a constant. When the organic material was crosslinked, the interaction radius $R_1$ of the HSP values of the non-forming part were used for the calculation of a RED value of the forming part.

Next, a specific method for determining the HSP value (##) of the forming part of Example 19 will be described. "##" is a degree of crosslinking of the polymer. In Examples 20 to 23 and Comparative Examples 6 to 9, a RED value of the forming part was determined in the same manner as in Example 19.

<Determination method of RED value of forming part of Example 19>

According to the method described in "Determination method of HSP values of non-forming part" above, the HSP values (PVB) were determined as follows:

$$HSP(PVB) = (dD,\ dP,\ dH) = (18.12,\ 6.72,\ 10.07)$$

In the same manner as in Example 1, the HSP values (EtF) of the ethanol fragment below were used:

$$HSP(EtF) = (dD,\ dP,\ dH) = (15.6,\ 4.3,\ 17.2)$$

In the same manner as in Example 1, the HSP values (TF) of the hydrogenated TDI fragment blow were used:

$$HSP(TF) = (dD,\ dP,\ dH) = (17.6,\ 4.8,\ 6.7)$$

Since the HSP values (PVBF) of the PVB fragment could be treated as a mixed multiple component system where the HSP values (PVB) captured both the HSP values (PVBF) and the HSP values (EtF), the HSP value (PVBF)

could be determined by a mass fraction in which the HSP values (EtF) were subtracted from the HSP values (PVB).

Since PVB had the hydroxyl value of 73 mgKOH/g, PVB had 0.001301118 mol/g of hydroxyl groups. Therefore, the following calculation was performed:

$$0.001301118\ \text{mol/g}*45\ (\text{molecular weight of EtF})*100 = 14$$

Meaning that, PVB included 5.85% by mass of EtF.

Since PVB was composed of EtF and PVBF, PVBF constituted the remaining 94.15% by mass.

Since the HSP values (PVB) and the HSP values (EtF) were known, the dispersion component $dD_{PVBF}$ of the HSP values (PVBF) was determined by a mass fraction:

$$dD_{PVBF} = \{dD_{EtF}-0.06*dD_{PVB}\}/0.94 = (15.6-0.06*18.12)/0.94 = 18.28$$

The polarity component $dP_{PVBF}$ of the HSP values (PVBF) and the hydrogen bonding component $dH_{PVBF}$ of the HSP values (PVBF) were also determined in the same manner. The polarity component $dP_{PVBF}$ was 6.56 [$MPa^{0.5}$], and the hydrogen bonding component $dH_{PVBF}$ was 9.63 [$MPa^{0.5}$].

Next, the HSP values of the forming part (degree of crosslinking ## of PVB) were determined from the above-determined HSP values (PVB), HSP values (PVBF), and HSP values (EtF), and the degree of crosslinking ## of PVB.

In the case of the HSP values (100) of the forming part where the degree of crosslinking ## of PVB was 100%, all the EtF within PVB were reacted to be TF. Therefore, the ratio of the crosslinked fragment TF due to TDI was calculated as follows, based on that the hydroxyl value of PVB was 73 mgKOH/g, i.e., the amount of hydroxyl groups was 0.001301118 mol/g.

$$0.001301118\ \text{mol/g}*270\ (\text{molecular weight of TF})/2\ (\text{as TF had 2 crosslink points})*100 = 18$$

Meaning that, the ratio of the crosslinked fragment TF due to TDI was 18% by mass. The remaining 82% by mass stayed as PVBF without being used for crosslinking.

As described above, the dispersion component ($dD_{100}$), polarity component ($dP_{100}$), and hydrogen bonding component ($dH_{100}$) of the HSP values (100) of PVB whose degree of crosslinking ## was 100% were determined as [18.16, 7.13, 9.11] from the following equation:

$$\text{Dispersion component } (dD_{100}),\ \text{polarity component } (dP_{100}),\ \text{hydrogen bonding component } (dH_{100}) = [(0.18*dD_{TF}+0.82*dD_{PVBF}),\ (0.18*dP_{TF}+0.82*dP_{PVBF}),\ (0.18*dH_{TF}+0.82*dH_{PVBF})]$$

The values [18.16, 7.13, 9.11] were determined as $dD_{100}$, $dP_{100}$, and $dH_{100}$, respectively.

When the HSP values (20) of Polymer X whose degree of crosslinking ## was 20% were determined, 80% remained as PVB, thus the values [18.13, 6.8, 9.88] were determined from the following equation:

$$(\text{Dispersion component } (dD_{MIX}),\ \text{polarity component } (dP_{MIX}),\ \text{hydrogen bonding component } (dH_{MIX})) = [0.8*dDx+0.2*dD_{100},\ 0.8*dPx+0.2*dP_{100},\ 0.8*dHx+0.2*dH_{100}]$$

Based on the results above, a RED value of the forming part of Example 19 was calculated using the values of the solvents on the database according to the mathematical equation (3). As a result, the RED value of the forming part of Example 19 was 1.00.

Next, a specific method for determining a RED value of the forming part of Example 24 will be described. In Examples 25 to 27 and Comparative Examples 10 to 13, a RED value of the forming part was determined in the same manner as in Example 24.

<RED value of forming part of Example 24>

According to the method described in "Determination method of HSP values of non-forming part" (see the paragraph [0147]) above, the HSP values (PVP) and R were determined as follows:

$$HSP(PVP) = (19.7, 12.29, 16.35)$$

$$R = 13.2$$

A RED value of the forming part of Example 24 was calculated from the values above and the values of the solvents on database according to the mathematical equation (3). As a result, the RED value of the forming part of Example 24 was 1.12.

Next, a specific method for determining a RED value of the forming part of Example 28 will be described. In Examples 29 to 31 and Comparative Examples 14 to 17, a RED value of the forming part was determined in the same manner as in Example 28.

<RED value of forming part of Example 28>

According to the method described in "Determination method of HSP values of non-forming part" (see the paragraph [0147]) above, the HSP values (PVP) and R were determined as follows:

$$HSP(PVP) = (14.05, 0.33, 5.89)$$

$$R = 12.9$$

A RED value of the forming part of Example 28 was calculated from the values above and the values of the solvents on database according to the mathematical equation (3). As a result, the RED value of the forming part of Example 28 was 1.21.

Table 1-1

| | Coating resin | Object forming liquid | Degree of crosslinking (%) | Organic solvent (powder removal liquid) |
|---|---|---|---|---|
| Ex. 1 | polyacrylic polyol | Object Forming Liquid 1 | 20 | acetone |
| Ex. 2 | polyacrylic polyol | Object Forming Liquid 1 | 20 | acetonitrile |
| Ex. 3 | polyacrylic polyol | Object Forming Liquid 1 | 20 | 1-butanol |
| Ex. 4 | polyacrylic polyol | Object Forming Liquid 1 | 20 | n-butylacetate |
| Ex. 5 | polyacrylic polyol | Object Forming Liquid 1 | 20 | γ-butyrolactone |
| Comp. Ex. 1 | polyacrylic polyol | Object Forming Liquid 1 | 20 | cyclohexane |
| Ex. 6 | polyacrylic polyol | Object Forming Liquid 1 | 20 | cyclohexanol |
| Ex. 7 | polyacrylic polyol | Object Forming Liquid 1 | 20 | diacetone alcohol |
| Ex. 8 | polyacrylic polyol | Object Forming Liquid 1 | 20 | diethylene glycol |

(continued)

| | Coating resin | Object forming liquid | Degree of crosslinking (%) | Organic solvent (powder removal liquid) |
|---|---|---|---|---|
| Comp. Ex. 2 | polyacrylic polyol | Object Forming Liquid 1 | 20 | dimethylformamide |
| Comp. Ex. 3 | polyacrylic polyol | Object Forming Liquid 1 | 20 | dimethyl sulfoxide |
| Ex. 9 | polyacrylic polyol | Object Forming Liquid 1 | 20 | 1,4-dioxane |
| Ex. 10 | polyacrylic polyol | Object Forming Liquid 1 | 20 | ethanol |
| Ex. 11 | polyacrylic polyol | Object Forming Liquid 1 | 20 | methyl ethyl ketone |
| Comp. Ex. 4 | polyacrylic polyol | Object Forming Liquid 1 | 20 | N-methyl-2-pyrrolidone |
| Ex. 12 | polyacrylic polyol | Object Forming Liquid 1 | 20 | 2-phenoxyethanol |
| Ex. 13 | polyacrylic polyol | Object Forming Liquid 1 | 20 | propylene carbonate |
| Ex. 14 | polyacrylic polyol | Object Forming Liquid 1 | 20 | propylene glycol monomethyl ether |
| Ex. 15 | polyacrylic polyol | Object Forming Liquid 1 | 20 | propylene glycol monomethyl ether acetate |
| Ex. 16 | polyacrylic polyol | Object Forming Liquid 1 | 20 | tetrahydrofuran |
| Comp. Ex. 5 | polyacrylic polyol | Object Forming Liquid 1 | 20 | toluene |
| Ex. 17 | polyacrylic polyol | Object Forming Liquid 1 | 20 | triethylene glycol dimethyl ether |
| Ex. 18 | polyacrylic polyol | Object Forming Liquid 1 | 20 | di-(2-methoxyethyl) ether |

Table 1-2

| | Coating resin | Object forming liquid | Degree of crosslinking (%) | Organic solvent (powder removal liquid) |
|---|---|---|---|---|
| Ex. 19 | polyvinyl butyral | Object Forming Liquid 2 | 20 | diethyl ether |
| Ex. 20 | polyvinyl butyral | Object Forming Liquid 2 | 20 | methoxymethanol |
| Ex. 21 | polyvinyl butyral | Object Forming Liquid 2 | 20 | methylamine |
| Ex. 22 | polyvinyl butyral | Object Forming Liquid 2 | 20 | methyl isopropyl ether |
| Ex. 23 | polyvinyl butyral | Object Forming Liquid 2 | 20 | methyl ethyl ether |

(continued)

| | Coating resin | Object forming liquid | Degree of crosslinking (%) | Organic solvent (powder removal liquid) |
|---|---|---|---|---|
| Comp. Ex. 6 | polyvinyl butyral | Object Forming Liquid 2 | 20 | propylene carbonate |
| Comp. Ex. 7 | polyvinyl butyral | Object Forming Liquid 2 | 20 | propylene glycol |
| Comp. Ex. 8 | polyvinyl butyral | Object Forming Liquid 2 | 20 | 3-octanol |
| Comp. Ex. 9 | polyvinyl butyral | Object Forming Liquid 2 | 20 | ethylene glycol mono(2-ethylhexyl) ether |
| Ex. 24 | NA | Object Forming Liquid 3 | NA | isopropyl acetate |
| Ex. 25 | NA | Object Forming Liquid 3 | NA | acetonitrile |
| Ex. 26 | NA | Object Forming Liquid 3 | NA | chloroform |
| Ex. 27 | NA | Object Forming Liquid 3 | NA | methyl ethyl ketone |
| Comp. Ex. 10 | NA | Object Forming Liquid 3 | NA | pyrrole |
| Comp. Ex. 11 | NA | Object Forming Liquid 3 | NA | Dimethylformamide |
| Comp. Ex. 12 | NA | Object Forming Liquid 3 | NA | phenol |
| Comp. Ex. 13 | NA | Object Forming Liquid 3 | NA | 2,3-dichloropropanol |
| Ex. 28 | NA | Object Forming Liquid 4 | NA | 2,3-butanediol |
| Ex. 29 | NA | Object Forming Liquid 4 | NA | ethanol |
| Ex. 30 | NA | Object Forming Liquid 4 | NA | N-methyl-2-pyrrolidone |
| Ex. 31 | NA | Object Forming Liquid 4 | NA | phenol |
| Comp. Ex. 14 | NA | Object Forming Liquid 4 | NA | 3-methyl-1-hexanol |
| Comp. Ex. 15 | NA | Object Forming Liquid 4 | NA | di-(2-methoxyethyl) ether |
| Comp. Ex. 16 | NA | Object Forming Liquid 4 | NA | methyl isobutyl ketone |
| Comp. Ex. 17 | NA | Object Forming Liquid 4 | NA | ethyl acetate |

Table 2-1

| | HSP values of organic solvent | | | HSP values of non-forming part | | | | HSP values of forming part | | | |
|---|---|---|---|---|---|---|---|---|---|---|---|
| | dD | dP | dH | dD | dP | dH | $R_1$ | dD | dP | dH | $R_2$ |
| Ex. 1 | 15.5 | 10.4 | 7.0 | 20.27 | 12.38 | 10.19 | 11.67 | 20.13 | 12.22 | 9.75 | NA |
| Ex. 2 | 15.3 | 18 | 6.1 | 20.27 | 12.38 | 10.19 | 11.67 | 20.13 | 12.22 | 9.75 | NA |
| Ex. 3 | 16.0 | 5.7 | 15.8 | 20.27 | 12.38 | 10.19 | 11.67 | 20.13 | 12.22 | 9.75 | NA |
| Ex. 4 | 15.8 | 3.7 | 6.3 | 20.27 | 12.38 | 10.19 | 11.67 | 20.13 | 12.22 | 9.75 | NA |
| Ex. 5 | 18.0 | 16.6 | 7.4 | 20.27 | 12.38 | 10.19 | 11.67 | 20.13 | 12.22 | 9.75 | NA |
| Comp. Ex. 1 | 16.8 | 0 | 0.2 | 20.27 | 12.38 | 10.19 | 11.67 | 20.13 | 12.22 | 9.75 | NA |
| Ex. 6 | 17.4 | 4.1 | 13.5 | 20.27 | 12.38 | 10.19 | 11.67 | 20.13 | 12.22 | 9.75 | NA |
| Ex. 7 | 15.8 | 8.2 | 10.8 | 20.27 | 12.38 | 10.19 | 11.67 | 20.13 | 12.22 | 9.75 | NA |
| Ex. 8 | 16.6 | 12.0 | 19.0 | 20.27 | 12.38 | 10.19 | 11.67 | 20.13 | 12.22 | 9.75 | NA |
| Comp. Ex. 2 | 17.4 | 13.7 | 11.3 | 20.27 | 12.38 | 10.19 | 11.67 | 20.13 | 12.22 | 9.75 | NA |
| Comp. Ex. 3 | 18.4 | 16.4 | 10.2 | 20.27 | 12.38 | 10.19 | 11.67 | 20.13 | 12.22 | 9.75 | NA |
| Ex. 9 | 17.5 | 1.8 | 9.0 | 20.27 | 12.38 | 10.19 | 11.67 | 20.13 | 12.22 | 9.75 | NA |
| Ex. 10 | 15.8 | 8.8 | 19.4 | 20.27 | 12.38 | 10.19 | 11.67 | 20.13 | 12.22 | 9.75 | NA |
| Ex. 11 | 16.0 | 9.0 | 5.1 | 20.27 | 12.38 | 10.19 | 11.67 | 20.13 | 12.22 | 9.75 | NA |
| Comp. Ex. 4 | 18.0 | 12.3 | 7.2 | 20.27 | 12.38 | 10.19 | 11.67 | 20.13 | 12.22 | 9.75 | NA |
| Ex. 12 | 17.8 | 5.7 | 14.3 | 20.27 | 12.38 | 10.19 | 11.67 | 20.13 | 12.22 | 9.75 | NA |
| Ex. 13 | 20.0 | 18.0 | 4.1 | 20.27 | 12.38 | 10.19 | 11.67 | 20.13 | 12.22 | 9.75 | NA |
| Ex. 14 | 15.6 | 6.3 | 11.6 | 20.27 | 12.38 | 10.19 | 11.67 | 20.13 | 12.22 | 9.75 | NA |
| Ex. 15 | 15.6 | 5.6 | 9.8 | 20.27 | 12.38 | 10.19 | 11.67 | 20.13 | 12.22 | 9.75 | NA |
| Ex. 16 | 16.8 | 5.7 | 8.0 | 20.27 | 12.38 | 10.19 | 11.67 | 20.13 | 12.22 | 9.75 | NA |
| Comp. Ex. 5 | 18.0 | 1.4 | 2.0 | 20.27 | 12.38 | 10.19 | 11.67 | 20.13 | 12.22 | 9.75 | NA |
| Ex. 17 | 15.9 | 5.9 | 6.4 | 20.27 | 12.38 | 10.19 | 11.67 | 20.13 | 12.22 | 9.75 | NA |
| Ex. 18 | 15.7 | 6.1 | 6.5 | 20.27 | 12.38 | 10.19 | 11.67 | 20.13 | 12.22 | 9.75 | NA |

Table 2-2

| | HSP values of organic solvent | | | HSP values of non-forming part | | | | HSP values of forming part | | | |
|---|---|---|---|---|---|---|---|---|---|---|---|
| | dD | dP | dH | dD | dP | dH | R1 | dD | dP | dH | $R_2$ |
| Ex. 19 | 14.5 | 2.9 | 4.6 | 18.12 | 6.72 | 10.07 | 9.8 | 17.40 | 8.40 | 10.40 | NA |
| Ex. 20 | 16.0 | 9.0 | 18.5 | 18.12 | 6.72 | 10.07 | 9.8 | 17.40 | 8.40 | 10.40 | NA |
| Ex. 21 | 14.4 | 7.0 | 16.0 | 18.12 | 6.72 | 10.07 | 9.8 | 17.40 | 8.40 | 10.40 | NA |
| Ex. 22 | 14.8 | 4.3 | 3.8 | 18.12 | 6.72 | 10.07 | 9.8 | 17.40 | 8.40 | 10.40 | NA |
| Ex. 23 | 14.0 | 4.7 | 6.0 | 18.12 | 6.72 | 10.07 | 9.8 | 17.40 | 8.40 | 10.40 | NA |
| Comp. Ex. 6 | 20.0 | 18.0 | 4.1 | 18.12 | 6.72 | 10.07 | 9.8 | 17.40 | 8.40 | 10.40 | NA |
| Comp. Ex. 7 | 16.8 | 10.4 | 21.3 | 18.12 | 6.72 | 10.07 | 9.8 | 17.40 | 8.40 | 10.40 | NA |
| Comp. Ex. 8 | 16.0 | 4.2 | 8.6 | 18.12 | 6.72 | 10.07 | 9.8 | 17.40 | 8.40 | 10.40 | NA |
| Comp. Ex. 9 | 16.0 | 4.1 | 10.5 | 18.12 | 6.72 | 10.07 | 9.8 | 17.40 | 8.40 | 10.40 | NA |

(continued)

| | HSP values of organic solvent | | | HSP values of non-forming part | | | | HSP values of forming part | | | |
|---|---|---|---|---|---|---|---|---|---|---|---|
| | dD | dP | dH | dD | dP | dH | R1 | dD | dP | dH | $R_2$ |
| Ex. 24 | 14.9 | 4.5 | 8.2 | NA | NA | NA | NA | 19.70 | 12.29 | 16.35 | 13.2 |
| Ex. 25 | 15.3 | 18.0 | 6.1 | NA | NA | NA | NA | 19.70 | 12.29 | 16.35 | 13.2 |
| Ex. 26 | 17.8 | 3.1 | 5.7 | NA | NA | NA | NA | 19.70 | 12.29 | 16.35 | 13.2 |
| Ex. 27 | 16.0 | 9.0 | 5.1 | NA | NA | NA | NA | 19.70 | 12.29 | 16.35 | 13.2 |
| Comp. Ex. 10 | 19.2 | 11.0 | 10.0 | NA | NA | NA | NA | 19.70 | 12.29 | 16.35 | 13.2 |
| Comp. Ex. 11 | 17.4 | 13.7 | 11.3 | NA | NA | NA | NA | 19.70 | 12.29 | 16.35 | 13.2 |
| Comp. Ex. 12 | 18.5 | 5.9 | 14.9 | NA | NA | NA | NA | 19.70 | 12.29 | 16.35 | 13.2 |
| Comp. Ex. 13 | 17.5 | 9.2 | 14.6 | NA | NA | NA | NA | 19.70 | 12.29 | 16.35 | 13.2 |
| Ex. 28 | 17.0 | 7.6 | 18.3 | NA | NA | NA | NA | 14.05 | 0.33 | 5.80 | 12.9 |
| Ex. 29 | 15.8 | 8.8 | 19.4 | NA | NA | NA | NA | 14.05 | 0.33 | 5.80 | 12.9 |
| Ex. 30 | 18.0 | 12.3 | 7.2 | NA | NA | NA | NA | 14.05 | 0.33 | 5.80 | 12.9 |
| Ex. 31 | 18.5 | 5.9 | 14.9 | NA | NA | NA | NA | 14.05 | 0.33 | 5.80 | 12.9 |
| Comp. Ex. 14 | 15.9 | 4.5 | 9.6 | NA | NA | NA | NA | 14.05 | 0.33 | 5.80 | 12.9 |
| Comp. Ex. 15 | 15.7 | 6.1 | 6.5 | NA | NA | NA | NA | 14.05 | 0.33 | 5.80 | 12.9 |
| Comp. Ex. 16 | 15.3 | 6.1 | 4.1 | NA | NA | NA | NA | 14.05 | 0.33 | 5.80 | 12.9 |
| Comp. Ex. 17 | 15.8 | 5.3 | 7.2 | NA | NA | NA | NA | 14.05 | 0.33 | 5.80 | 12.9 |

*In Examples 1 to 23 and Comparative Examples 1 to 9 of Table 2, "NA" was depicted because the interaction radius $R_2$ of the HSP values of the forming part could not be determined as the resin of the formed object was crosslinked.
*In Examples 24 to 31 and Comparative Examples 10 to 17 of Table 2, "NA" as depicted because the HSP values of the non-forming part could not be determined as the non-forming part did not include the resin.

Table 3-1

| | RED value of non-forming part | RED value of forming part | Wet strength | Strength after drying | Solubility |
|---|---|---|---|---|---|
| Ex. 1 | 0.88 | 0.84 | 3 | 3 | 3 |
| Ex. 2 | 1.04 | 1.01 | 3 | 2 | 2 |
| Ex. 3 | 1.05 | 1.04 | 5 | 4 | 2 |
| Ex. 4 | 1.12 | 1.08 | 5 | 5 | 2 |
| Ex. 5 | 0.58 | 0.56 | 5 | 3 | 2 |
| Comp. Ex. 1 | 1.49 | 1.45 | 5 | 1 | 1 |
| Ex. 6 | 0.91 | 0.9 | 5 | 5 | 2 |
| Ex. 7 | 0.85 | 0.82 | 5 | 4 | 3 |
| Ex. 8 | 0.98 | 1.00 | 5 | 3 | 3 |
| Comp. Ex. 2 | 0.51 | 0.50 | 1 | 1 | 3 |
| Comp. Ex. 3 | 0.47 | 0.47 | 1 | 1 | 3 |
| Ex. 9 | 1.03 | 1.00 | 5 | 3 | 2 |
| Ex. 10 | 1.14 | 1.15 | 3 | 3 | 3 |
| Ex. 11 | 0.90 | 0.86 | 4 | 3 | 3 |

(continued)

| | RED value of non-forming part | RED value of forming part | Wet strength | Strength after drying | Solubility |
|---|---|---|---|---|---|
| Comp. Ex. 4 | 0.47 | 0.43 | 2 | 1 | 3 |
| Ex. 12 | 0.79 | 0.79 | 5 | 2 | 3 |
| Ex. 13 | 0.71 | 0.69 | 5 | 3 | 3 |
| Ex. 14 | 0.96 | 0.94 | 3 | 2 | 3 |
| Ex. 15 | 0.99 | 0.96 | 5 | 4 | 3 |
| Ex. 16 | 0.85 | 0.81 | 4 | 2 | 3 |
| Comp. Ex. 5 | 1.24 | 1.20 | 5 | 4 | 1 |
| Ex. 17 | 0.99 | 0.95 | 5 | 3 | 3 |
| Ex. 18 | 1.00 | 0.96 | 5 | 3 | 3 |

Table 3-2

| | RED value of non-forming part | RED value of forming part | Wet strength | Strength after drying | Solubility |
|---|---|---|---|---|---|
| Ex. 19 | 1.00 | 1.00 | 5 | 4 | 3 |
| Ex. 20 | 0.99 | 0.88 | 5 | 5 | 3 |
| Ex. 21 | 0.97 | 0.85 | 5 | 4 | 3 |
| Ex. 22 | 0.96 | 0.95 | 4 | 3 | 3 |
| Ex. 23 | 0.96 | 0.91 | 4 | 4 | 2 |
| Comp. Ex. 6 | 1.36 | 1.29 | 2 | 2 | 1 |
| Comp. Ex. 7 | 1.24 | 1.14 | 3 | 1 | 1 |
| Comp. Ex. 8 | 0.53 | 0.55 | 4 | 3 | 1 |
| Comp. Ex. 9 | 0.51 | 0.52 | 2 | 1 | 1 |
| Ex. 24 | NA | 1.12 | 5 | 5 | NA |
| Ex. 25 | NA | 1.11 | 4 | 5 | NA |
| Ex. 26 | NA | 1.10 | 4 | 4 | NA |
| Ex. 27 | NA | 1.05 | 5 | 5 | NA |
| Comp. Ex. 10 | NA | 0.50 | 1 | 1 | NA |
| Comp. Ex. 11 | NA | 0.53 | 1 | 2 | NA |
| Comp. Ex. 12 | NA | 0.53 | 1 | 1 | NA |
| Comp. Ex. 13 | NA | 0.43 | 1 | 2 | NA |
| Ex. 28 | NA | 1.21 | 5 | 5 | NA |

(continued)

| | RED value of non-forming part | RED value of forming part | Wet strength | Strength after drying | Solubility |
|---|---|---|---|---|---|
| Ex. 29 | NA | 1.27 | 5 | 5 | NA |
| Ex. 30 | NA | 1.12 | 4 | 4 | NA |
| Ex. 31 | NA | 1.08 | 4 | 5 | NA |
| Comp. Ex. 14 | NA | 0.52 | 1 | 2 | NA |
| Comp. Ex. 15 | NA | 0.52 | 1 | 2 | NA |
| Comp. Ex. 16 | NA | 0.5 | 1 | 1 | NA |
| Comp. Ex. 17 | NA | 0.48 | 1 | 1 | NA |

For example, embodiments of the present disclosure are as follows.

<1> A three-dimensional object producing method, including: applying an object forming liquid to powder including a base material and an organic material to form a solidified product; and removing the powder, which is deposited on the solidified product, from the solidified product using a powder removal liquid including an organic solvent,

wherein the following formulae are satisfied

$$\text{RED value of a non-forming part} < 1.20$$

$$\text{RED value of a forming part} > 0.55$$

where the forming part is a portion of the powder to which the object forming liquid is applied, and the RED value of the forming part is a distance between HSP values of the forming part and HSP values of the organic solvent, and
where the non-forming part is a portion of the powder to which the object forming liquid is not applied, and the RED value of the non-forming part is a distance between HSP values of the non-forming part and the HSP values of the organic solvent.

<2> The three-dimensional object producing method according to <1>, wherein the following formulae are satisfied

$$\text{RED value of the non-forming part} < 1.0$$

$$\text{RED value of the forming part} > 1.0.$$

<3> A three-dimensional object producing method, including: applying an object forming liquid including an organic material to powder including a base material to form a solidified product; and removing the powder, which is deposited on the solidified product, from the solidified product using a powder removal liquid including an organic solvent,

wherein the following formula is satisfied

$$\text{RED value of a forming part} > 0.55$$

where the forming part is a portion of the powder to which the object forming liquid is applied, and the RED value of the forming part is a distance between HSP values of the forming part and HSP values of the organic solvent.

<4> The three-dimensional object producing method according to <3>, wherein the following formula is satisfied

$$\text{RED value of the forming part} > 1.0.$$

<5> The three-dimensional object producing method according to any one of <1> to <4>,

wherein the RED value of the non-forming part is represented by the following mathematical equation (2), and the RED value of the forming part is represented by the following mathematical equation (3),

[Mathematical equation (2)]

$$\text{RED value of the non-forming part} = \{4*(dD_1-dD_S)^2+(dP_1-dP_S)^2+(dH_1-dH_S)^2\}^{0.5}/R_1$$

where, in the mathematical equation (2), $dD_1$ is a dispersion component of the HSP values of the non-forming part, $dD_s$ is a dispersion component of the HSP values of the organic solvent included in the powder removal liquid, $dP_1$ is a polarity component of the HSP values of the non-forming part, $dP_s$ is a polarity component of the HSP values of the organic solvent included in the powder removal liquid, $dH_1$ is a hydrogen bonding component of the HSP values of the non-forming part, $dH_s$ is a hydrogen bonding component of the HSP values of the organic solvent included in the powder removal liquid, and $R_1$ is an interaction radius of the HSP values of the non-forming part,

[Mathematical equation (3)]

$$\text{RED value of the forming part} =\{4*(dD_2-dD_S)^2+(dP_2-dP_S)^2+(dH_2-dH_S)^2\}^{0.5}/R_2$$

where, in the mathematical equation, $dD_2$ is a dispersion component of the HSP values of the forming part, $dD_s$ is a dispersion component of the HSP values of the organic solvent included in the powder removal liquid, $dP_2$ is a polarity component of the HSP values of the forming part, dPs is a polarity component of the HSP values of the organic solvent included in the powder removal liquid, $dH_2$ is a hydrogen bonding component of the HSP values of the forming part, dHs is a hydrogen bonding component of the HSP values of the organic solvent included in the powder removal liquid, and $R_2$ is the interaction radius $R_1$ of the HSP values of the non-forming part when the organic material is crosslinked, and is an interaction radius of the HSP values of the forming part when the organic material is not crosslinked.

<6> The three-dimensional object producing method according to any one of <1> to <5>,
wherein the powder removal liquid includes the organic solvent that is at least one selected from the group consisting of ketone, halogen, alcohol, ester, ether, hydrocarbon, glycol, glycol ether, glycol ester, pyrrolidone, amide, amine, and carbonic acid ester.
<7> The three-dimensional object producing method according to any one of <1> to <6>,
wherein type 00 durometer hardness of the solidified product after being immersed in the powder removal liquid for 1 hour is 80 or greater.
<8> The three-dimensional object producing method according to any one of <1> to <7>, further including performing a sintering process on the solidified product.
<9> The three-dimensional object producing method according to any one of <1>, <2>, and <5> to <8>,
wherein the object forming liquid further includes a crosslinking agent.
<10> The three-dimensional object producing method according to any one of <1>, <2>, and <5> to <9>,
wherein the organic material is a hydroxyl group-containing resin.
<11> The three-dimensional object producing method according to <9> or <10>,
wherein the crosslinking agent is at least one selected from the group consisting of isocyanate, acid anhydride, epoxy, and phenol aldehyde.
<12> The three-dimensional object producing method according to any one of <3> to <8>,

wherein the organic material included in the object forming liquid is a hydroxyl group-containing resin.
<13> The three-dimensional object producing method according to <10> or <12>,
wherein the hydroxyl group-containing resin is at least one selected from the group consisting of polyvinyl acetal, polyvinyl butyral, polyacrylic polyol, polyester polyol, polybutadiene polyol, ethyl cellulose, and nitrocellulose.
<14> The three-dimensional object producing method according to any one of <1> to <13>,
wherein the base material is a metal, or a ceramic, or a combination of a metal and a ceramic.
<15> A three-dimensional forming kit, including:

powder including a base material and an organic material;
an object forming liquid configured to solidify the powder to form a solidified product; and
a powder removal liquid that includes an organic solvent and is configured to remove the powder deposited on the solidified product from the solidified product,
wherein the following formulae are satisfied

$$\text{RED value of a non-forming part} < 1.20$$

$$\text{RED value of a forming part} > 0.55$$

where the forming part is a portion of the powder to which the object forming liquid is applied, and the RED value of the forming part is a distance between HSP values of the forming part and HSP values of the organic solvent, and
where the non-forming part is a portion of the powder to which the object forming liquid is not applied, and the RED value of the non-forming part is a distance between HSP values of the non-forming part and the HSP values of the organic solvent.

<16> A three-dimensional forming kit, including:

powder including a base material;
an object forming liquid that includes an organic material and is configured to solidify the powder to form a solidified product; and a powder removal liquid that includes an organic solvent and is configured to remove the powder deposited on the solidified product from the solidified product,
wherein the following formula is satisfied

$$\text{RED value of a forming part} > 0.55$$

where the forming part is a portion of the powder to which the object forming liquid is applied, and the RED value of the forming part is a distance between HSP values of the forming part and HSP values of the organic solvent.

The three-dimensional object producing method according to any one of <1> to <14>, and the three-dimensional forming kit according to <15> or <16> can solve the above-described various problems existing in the art, and can achieve the object of the present disclosure.

## Claims

**1.** A three-dimensional object producing method, comprising:

applying an object forming liquid to powder including a base material and an organic material to form a solidified product; and
removing the powder, which is deposited on the solidified product, from the solidified product using a powder removal liquid including an organic solvent,
wherein the following formulae are satisfied

$$\text{RED value of a non-forming part} < 1.20$$

$$\text{RED value of a forming part} > 0.55$$

where the forming part is a portion of the powder to which the object forming liquid is applied, and the RED value of the forming part is a distance between HSP values of the forming part and HSP values of the organic solvent, and
where the non-forming part is a portion of the powder to which the object forming liquid is not applied, and the RED value of the non-forming part is a distance between HSP values of the non-forming part and the HSP values of the organic solvent.

**2.** The three-dimensional object producing method according to claim 1,
wherein the following formulae are satisfied

$$\text{RED value of the non-forming part} < 1.0$$

$$\text{RED value of the forming part} > 1.0.$$

**3.** A three-dimensional object producing method, comprising:

applying an object forming liquid including an organic material to powder including a base material to form a solidified product; and
removing the powder, which is deposited on the solidified product, from the solidified product using a powder removal liquid including an organic solvent,
wherein the following formula is satisfied

$$\text{RED value of a forming part} > 0.55$$

where the forming part is a portion of the powder to which the object forming liquid is applied, and the RED value of the forming part is a distance between HSP values of the forming part and HSP values of the organic solvent.

**4.** The three-dimensional object producing method according to claim 3,
wherein the following formula is satisfied

$$\text{RED value of the forming part} > 1.0.$$

**5.** The three-dimensional object producing method according to any one of claims 1 to 4,

wherein the RED value of the non-forming part is represented by the following mathematical equation (2), and the RED value of the forming part is represented by the following mathematical equation (3),

[Mathematical equation (2)]

$$\text{RED value of the non-forming part} = \{4*(dD_1-dD_S)^2+(dP_1-dP_S)^2+(dH_1-dH_S)^2\}^{0.5}/R_1$$

where, in the mathematical equation (2), $dD_1$ is a dispersion component of the HSP values of the non-forming part, $dD_s$ is a dispersion component of the HSP values of the organic solvent included in the powder removal liquid, $dP_1$ is a polarity component of the HSP values of the non-forming part, $dP_s$ is a polarity component of the HSP values of the organic solvent included in the powder removal liquid, $dH_1$ is a hydrogen bonding component of the HSP values of the non-forming part, $dH_s$ is a hydrogen bonding component of the HSP values of the organic solvent included in the powder removal liquid, and $R_1$ is an interaction radius of the HSP values of the non-forming part, [Mathematical equation (3)]
RED value of the forming part = $\{4*(dD_2-dD_S)^2+(dP_2-dP_S)^2+(dH_2-dH_S)^2\}^{0.5}/R_2$ where, in the mathematical equation, $dD_2$ is a dispersion component of the HSP values of the forming part, $dD_S$ is a dispersion component of the HSP values of the organic solvent included in the powder removal liquid, $dP_2$ is a polarity component of the HSP values of the forming part, dPs is a polarity component of the HSP values of the organic solvent included in the powder removal liquid, $dH_2$ is a hydrogen bonding component of the HSP values of the forming part, dHs is a hydrogen bonding component of the HSP values of the organic solvent included in the powder removal liquid, and $R_2$ is the interaction radius $R_1$ of the HSP values of the non-forming part when the organic material is crosslinked, and is an interaction radius of the HSP values of the forming part when the organic material is not crosslinked.

**6.** The three-dimensional object producing method according to any one of claims 1 to 5,
wherein the powder removal liquid includes the organic solvent that is at least one selected from the group consisting of ketone, halogen, alcohol, ester, ether, hydrocarbon, glycol, glycol ether, glycol ester, pyrrolidone, amide, amine, and carbonic acid ester.

**7.** The three-dimensional object producing method according to any one of claims 1 to 6,
wherein type 00 durometer hardness of the solidified product after being immersed in the powder removal liquid for 1 hour is 80 or greater.

**8.** The three-dimensional object producing method according to any one of claims 1 to 7, further comprising performing a sintering process on the solidified product.

**9.** The three-dimensional object producing method according to any one of claims 1, 2, and 5 to 8,
wherein the object forming liquid further includes a crosslinking agent.

**10.** The three-dimensional object producing method according to any one of claims 1, 2, and 5 to 9,
wherein the organic material is a hydroxyl group-containing resin.

**11.** The three-dimensional object producing method according to claim 9 or 10,
wherein the crosslinking agent is at least one selected from the group consisting of isocyanate, acid anhydride, epoxy, and phenol aldehyde.

**12.** The three-dimensional object producing method according to any one of claims 3 to 8,
wherein the organic material included in the object forming liquid is a hydroxyl group-containing resin.

**13.** The three-dimensional object producing method according to claim 10 or 12,
wherein the hydroxyl group-containing resin is at least one selected from the group consisting of polyvinyl acetal, polyvinyl butyral, polyacrylic polyol, polyester polyol, polybutadiene polyol, ethyl cellulose, and nitrocellulose.

**14.** The three-dimensional object producing method according to any one of claims 1 to 13,
wherein the base material is a metal, or a ceramic, or a combination of a metal and a ceramic.

**15.** A three-dimensional forming kit, comprising:

powder including a base material and an organic material;
an object forming liquid configured to solidify the powder to form a solidified product; and
a powder removal liquid that includes an organic solvent and is configured to remove the powder deposited on the solidified product from the solidified product,
wherein the following formulae are satisfied

$$\text{RED value of a non-forming part} < 1.20$$

$$\text{RED value of a forming part} > 0.55$$

where the forming part is a portion of the powder to which the object forming liquid is applied, and the RED value of the forming part is a distance between HSP values of the forming part and HSP values of the organic solvent, and

where the non-forming part is a portion of the powder to which the object forming liquid is not applied, and the RED value of the non-forming part is a distance between HSP values of the non-forming part and the HSP values of the organic solvent.

**16.** A three-dimensional forming kit, comprising:

powder including a base material;

an object forming liquid that includes an organic material and is configured to solidify the powder to form a solidified product; and

a powder removal liquid that includes an organic solvent and is configured to remove the powder deposited on the solidified product from the solidified product,

wherein the following formula is satisfied

$$\text{RED value of a forming part} > 0.55$$

where the forming part is a portion of the powder to which the object forming liquid is applied, and the RED value of the forming part is a distance between HSP values of the forming part and HSP values of the organic solvent.

Fig. 1

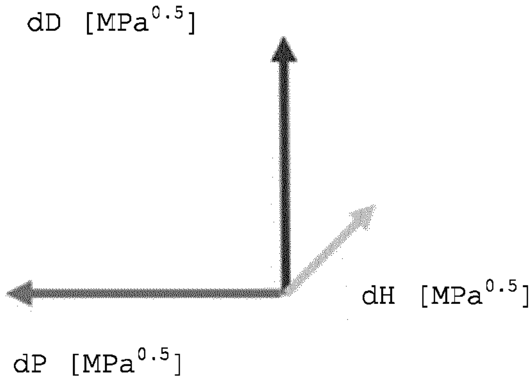


Fig. 2

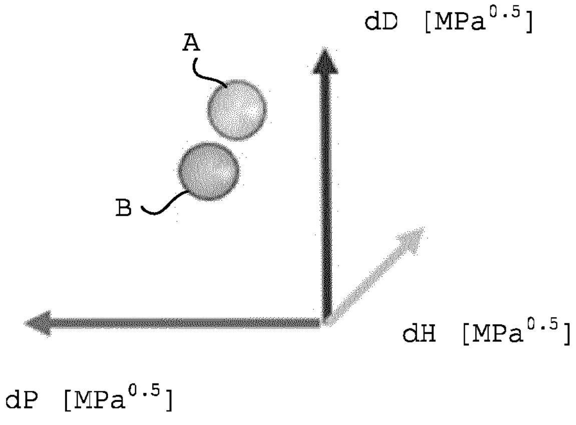

Fig. 3

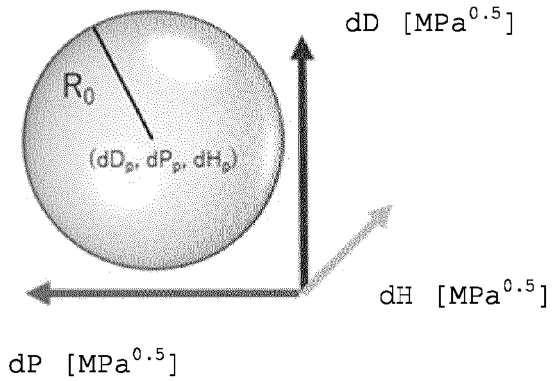


Fig. 4A

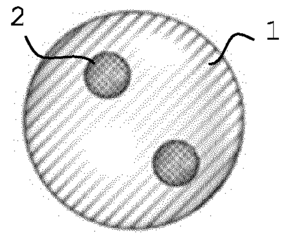


RED < 1

Fig. 4B

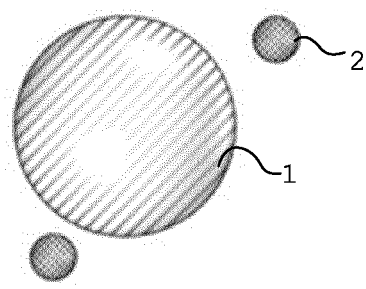


RED > 1

Fig. 5

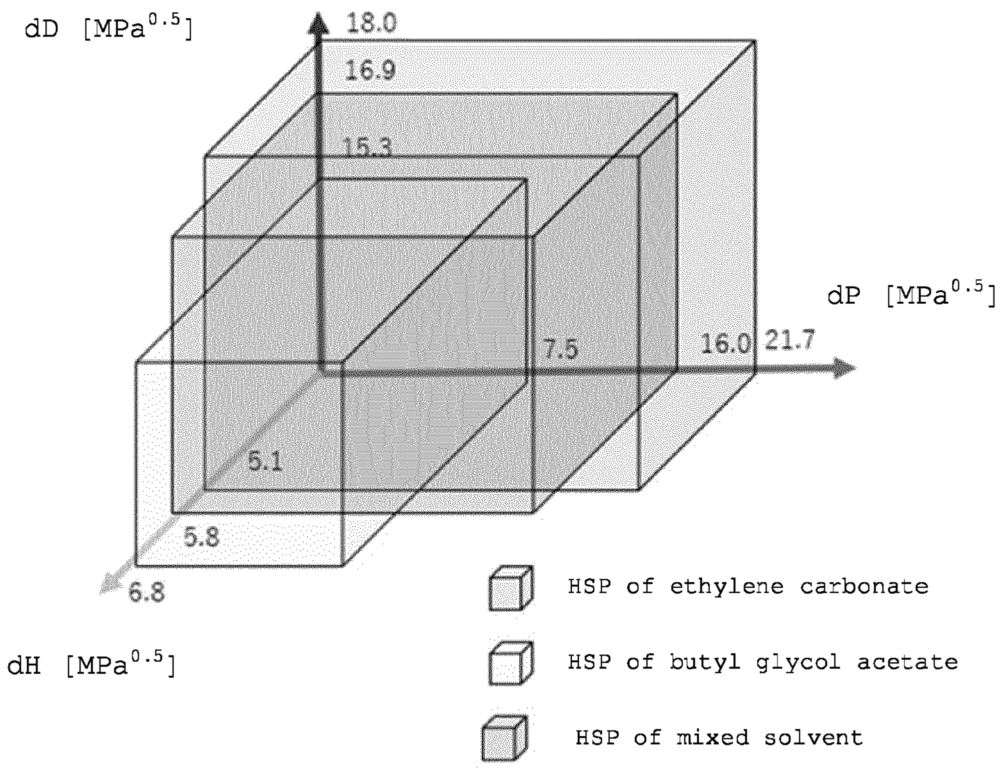
dD [MPa$^{0.5}$]
18.0
16.9
15.3
dP [MPa$^{0.5}$]
7.5
16.0
21.7
5.1
5.8
6.8
dH [MPa$^{0.5}$]
HSP of ethylene carbonate
HSP of butyl glycol acetate
HSP of mixed solvent

Fig. 6

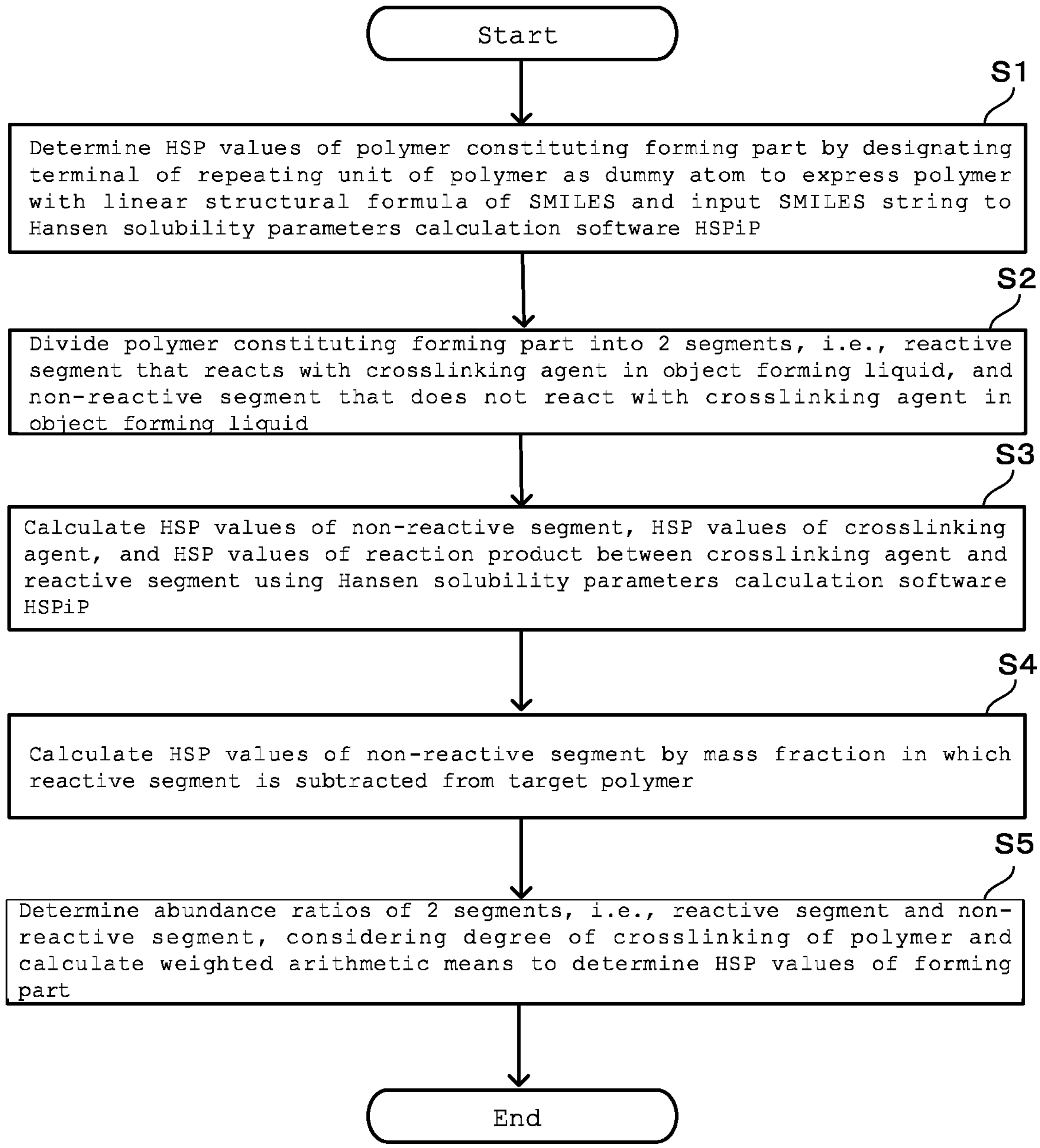
Start
S1
Determine HSP values of polymer constituting forming part by designating terminal of repeating unit of polymer as dummy atom to express polymer with linear structural formula of SMILES and input SMILES string to Hansen solubility parameters calculation software HSPiP
S2
Divide polymer constituting forming part into 2 segments, i.e., reactive segment that reacts with crosslinking agent in object forming liquid, and non-reactive segment that does not react with crosslinking agent in object forming liquid
S3
Calculate HSP values of non-reactive segment, HSP values of crosslinking agent, and HSP values of reaction product between crosslinking agent and reactive segment using Hansen solubility parameters calculation software HSPiP
S4
Calculate HSP values of non-reactive segment by mass fraction in which reactive segment is subtracted from target polymer
S5
Determine abundance ratios of 2 segments, i.e., reactive segment and non-reactive segment, considering degree of crosslinking of polymer and calculate weighted arithmetic means to determine HSP values of forming part
End

Fig. 7

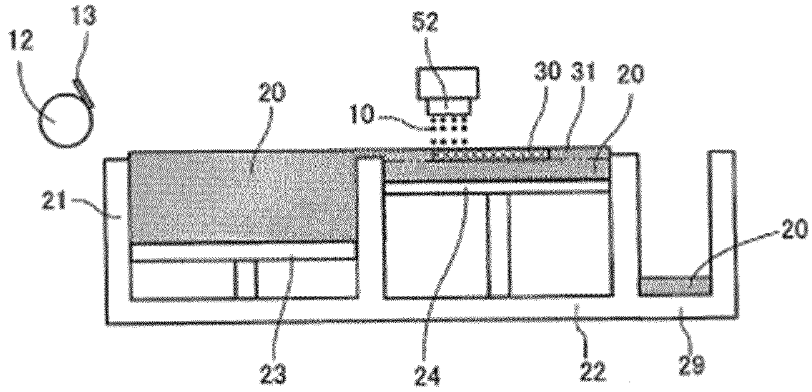


Fig. 8A

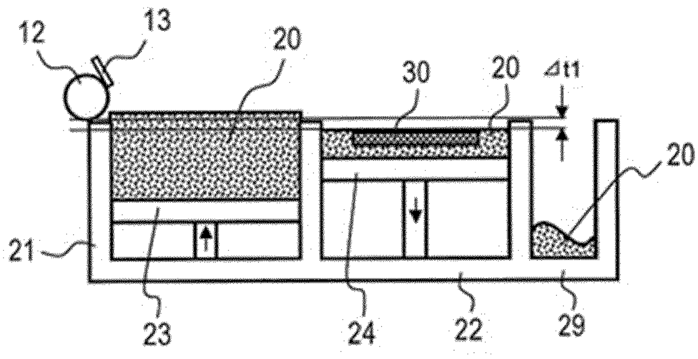


Fig. 8B

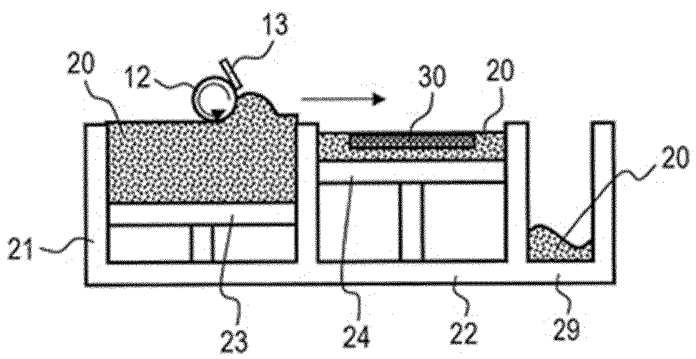

Fig. 8C

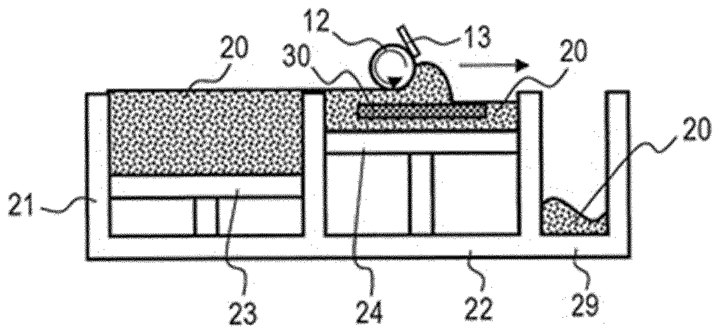


Fig. 8D

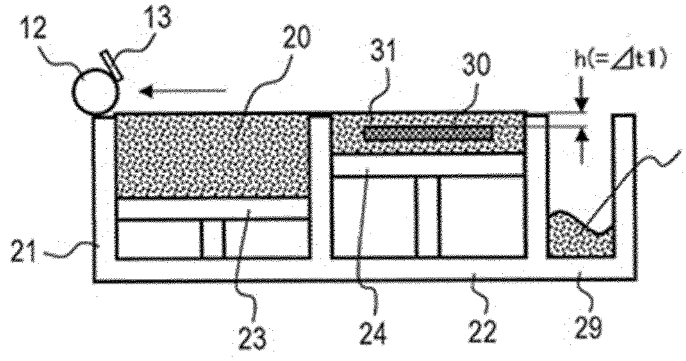


Fig. 8E

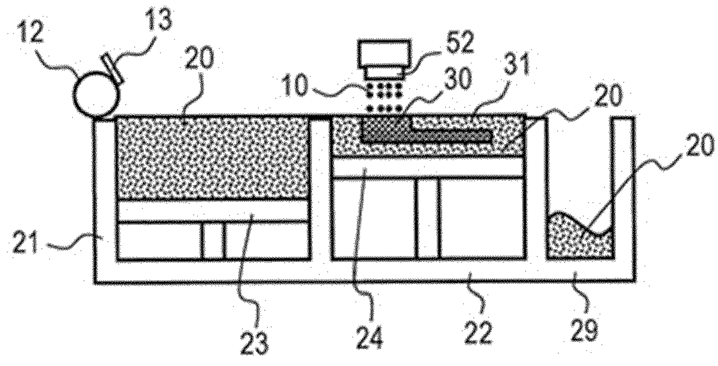

Fig. 9

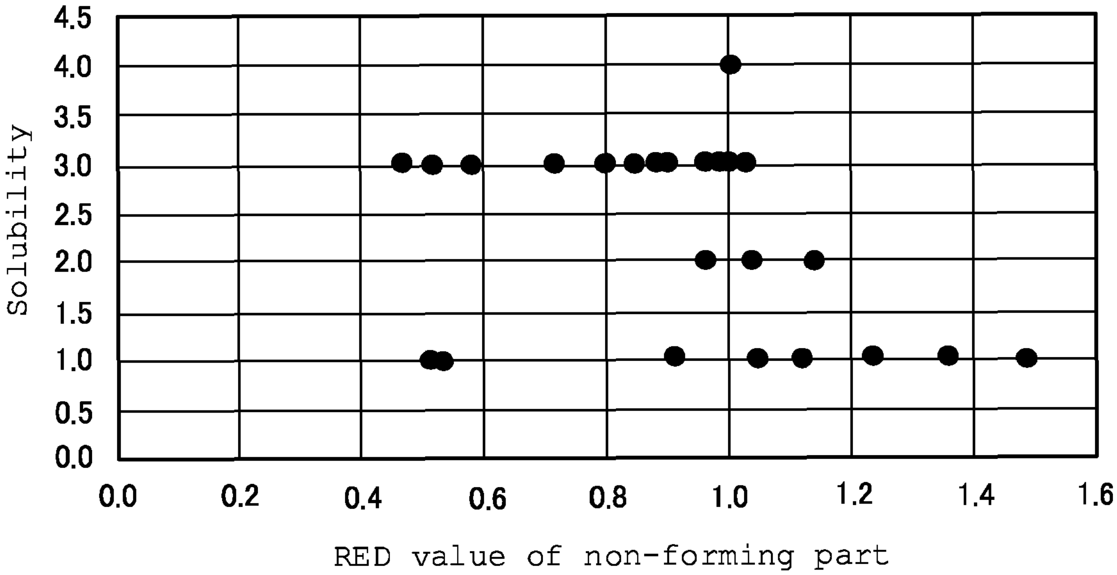
4.5
4.0
3.5
3.0
2.5
2.0
1.5
1.0
0.5
0.0
Solubility
0.0
0.2
0.4
0.6
0.8
1.0
1.2
1.4
1.6
RED value of non-forming part

Fig. 10

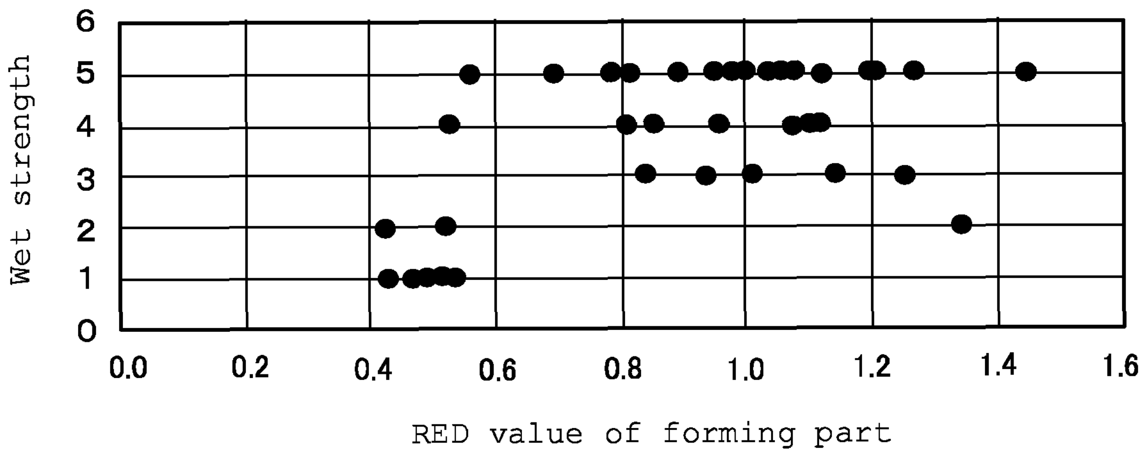
6
5
4
3
2
1
0
Wet strength
0.0
0.2
0.4
0.6
0.8
1.0
1.2
1.4
1.6
RED value of forming part

Fig. 11

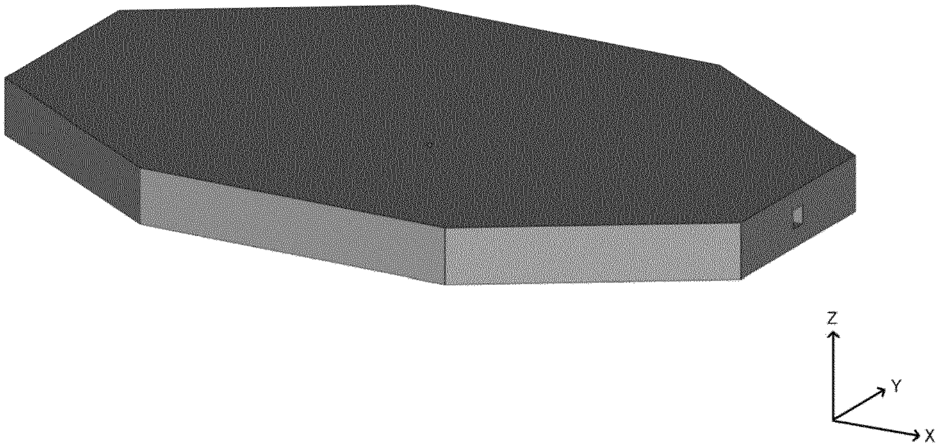


Fig. 12

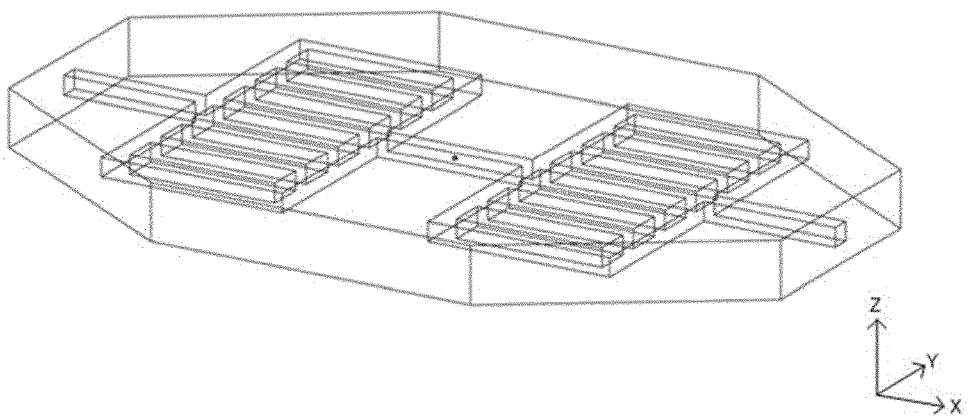

Fig. 13

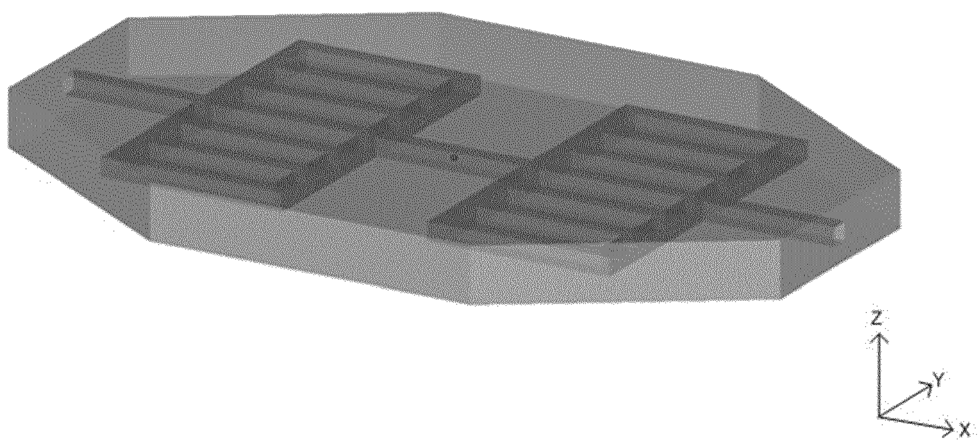


Fig. 14

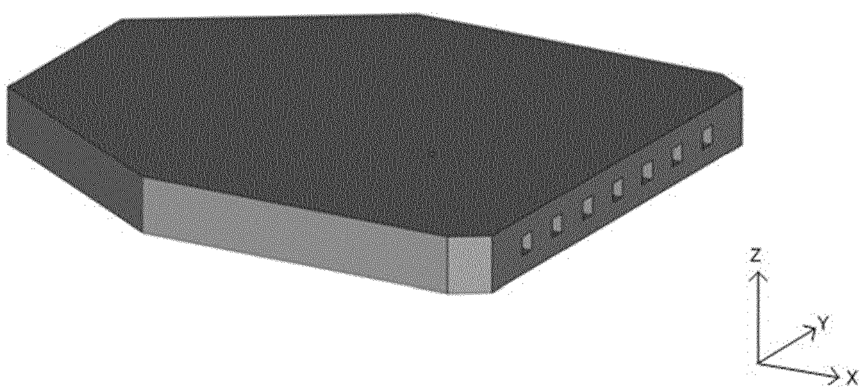

Fig. 15

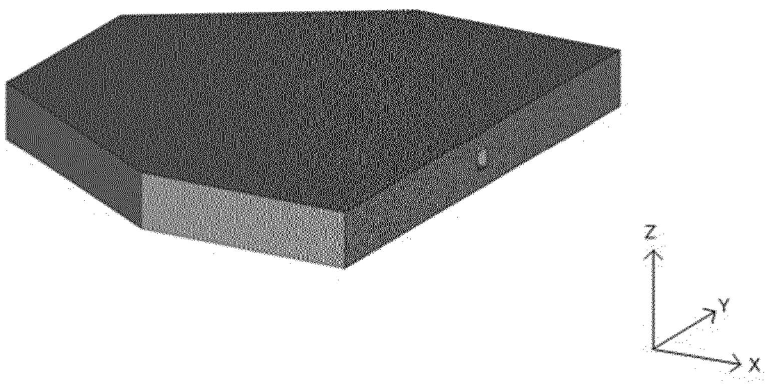


Fig. 16

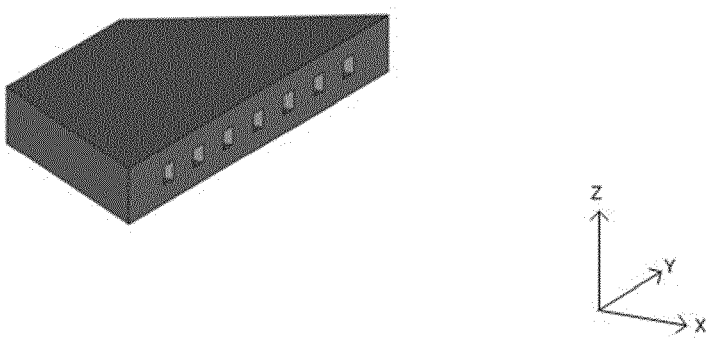

Fig. 17

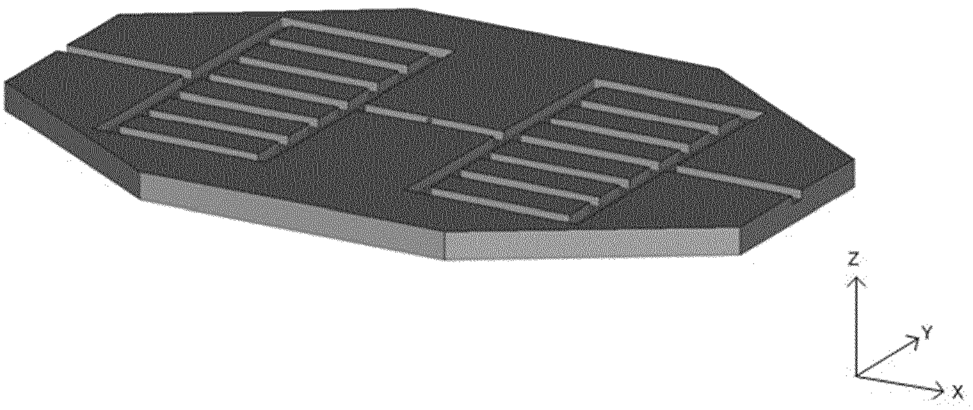

## INTERNATIONAL SEARCH REPORT

International application No. PCT/JP2021/011038

**A. CLASSIFICATION OF SUBJECT MATTER**

Int. Cl. B29C64/393(2017.01)i, B29C64/165(2017.01)i, B29C64/314(2017.01)i, B33Y10/00(2015.01)i, B33Y50/02(2015.01)i, B33Y70/10(2020.01)i
FI: B29C64/393, B29C64/165, B29C64/314, B33Y10/00, B33Y50/02, B33Y70/10

According to International Patent Classification (IPC) or to both national classification and IPC

**B. FIELDS SEARCHED**

Minimum documentation searched (classification system followed by classification symbols)
Int. Cl. B29C64/393, B29C64/165, B29C64/314, B33Y10/00, B33Y50/02, B33Y70/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2019-157201 A (RICOH CO., LTD.) 19 September 2019, claims 1-10, paragraphs [0014]-[0024], [0059] | 1-7, 9-16<br>8 |
| Y | JP 2016-28872 A (RICOH CO., LTD.) 03 March 2016, claims 1-18, paragraphs [0016]-[0026], [0032]-[0040] | 8 |
| A | JP 2018-80359 A (RICOH CO., LTD.) 24 May 2018, claims 1-12, paragraphs [0016]-[0051] | 1-16 |
| A | JP 2016-22698 A (SEIKO EPSON CORP.) 08 February 2016, paragraphs [0102]-[0108] | 1-16 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22.04.2021 | 11.05.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/011038

C (Continuation). DOCUMENTS CONSIDERED TO BE RELEVANT

| Category* | Citation of document, with indication, where appropriate, of the relevant passages | Relevant to claim No. |
|---|---|---|
| P, X | JP 2021-11107 A (RICOH CO., LTD.) 04 February 2021, paragraphs [0011]-[0061] | 1-16 |

Form PCT/ISA/210 (continuation of second sheet) (January 2015)

**INTERNATIONAL SEARCH REPORT**
Information on patent family members

International application No.
PCT/JP2021/011038

| Patent Documents referred to in the Report | Publication Date | Patent Family | Publication Date |
|---|---|---|---|
| JP 2019-157201 A | 19.09.2019 | (Family: none) | |
| JP 2016-28872 A | 03.03.2016 | US 2016/0236412 A1<br>claims 1-18, paragraphs [0036]-[0072]<br>WO 2015/046629 A1<br>EP 3052300 A1<br>KR 10-2016-0055882 A<br>CN 105764672 A<br>RU 2016116942 A<br>KR 10-2018-0049172 A | |
| JP 2018-80359 A | 24.05.2018 | (Family: none) | |
| JP 2016-22698 A | 08.02.2016 | (Family: none) | |
| JP 2021-11107 A | 04.02.2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016013658 A
- JP 2017094714 A
- JP 3607300 B


### Non-patent literature cited in the description


- **C. M. HANSEN.** Hansen solubility parameters: A user's handbook. CRC Press, 2007